(19) Europäisches Patentamt
European Patent Office
Office européen des brevets

(11) EP 4 807 029 A1

(12) **EUROPEAN PATENT APPLICATION**
published in accordance with Art. 153(4) EPC

(43) Date of publication:
**16.09.2026 Bulletin 2026/38**

(21) Application number: **24888464.5**

(22) Date of filing: **11.10.2024**

(51) International Patent Classification (IPC):
***C22C 9/04*** *(2006.01)* ***B22D 11/00*** *(2006.01)*
***B22D 11/04*** *(2006.01)* ***B23B 1/00*** *(2006.01)*
***C22F 1/00*** *(2006.01)* ***C22F 1/08*** *(2006.01)*

(52) Cooperative Patent Classification (CPC):
**B22D 11/00; B22D 11/04; B23B 1/00; C22C 9/04; C22F 1/00; C22F 1/08**

(86) International application number:
**PCT/JP2024/036437**

(87) International publication number:
**WO 2025/100166 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.11.2023 JP 2023190352**

(71) Applicant: **Mitsubishi Materials Corporation**
**Tokyo 100-8117 (JP)**

(72) Inventors:
- **KATAOKA, Masahiro**
  **Iwaki-shi, Fukushima 971-8101 (JP)**
- **SATO, Shinobu**
  **Iwaki-shi, Fukushima 971-8101 (JP)**
- **DAIRAKU, Kanta**
  **Iwaki-shi, Fukushima 971-8101 (JP)**
- **SUZAKI, Koichi**
  **Sakai-shi, Osaka 590-0906 (JP)**
- **GOTO, Hiroki**
  **Sakai-shi, Osaka 590-0906 (JP)**

(74) Representative: **Hoffmann Eitle**
**Patent- und Rechtsanwälte PartmbB**
**Arabellastraße 30**
**81925 München (DE)**

(54) **CU-ZN-SI-PB-P-BASED ALLOY CONTINUOUS CAST WIRE ROD MATERIAL**

(57) Provided is a Cu-Zn-Si-Pb-P-based alloy continuous cast wire rod including: Cu in an amount of more than 60.0 mass% and less than 65.0 mass%; Si in a range of 0.40 mass% or more and 1.20 mass% or less; Pb in a range of 0.002 mass% or more and 0.250 mass% or less; P in a range of 0.040 mass% or more and 0.190 mass% or less; and Bi as an optional element in an amount of 0.001 mass% or more and 0.100 mass% or less, with a balance being Zn and impurities, in which a total content of Fe, Mn, Co, and Cr, which are impurities, is 0.450 mass% or less, and a total content of Sn and Al is 0.30 mass% or less, and in a cross section orthogonal to a casting direction, an area ratio of an $\alpha$ phase to a $\beta$ phase is $\alpha$:$\beta$ = 40 to 70:60 to 30, an area rate of a $\gamma$ phase is 0.1% or less, and an area rate of a fine $\alpha$ phase with a grain size of 10 $\mu$m or less is 30% or more and 60% or less.

EP 4 807 029 A1

## Description

TECHNICAL FIELD

The present invention relates to a Cu-Zn-Si-Pb-P-based alloy continuous cast wire rod used for automobile parts, electric/electronic device parts, mechanical parts, stationery, toys, sliding parts, instrument parts, precision mechanical parts, medical parts, drinking equipment and parts, drainage equipment and parts, industrial piping parts, and parts related to liquids or gases such as drinking water, industrial water, drainage, and hydrogen. Specific names of the parts include valves, fittings, cocks, water supply cocks, gears, axles, bearings, shafts, sleeves, spindles, sensors, bolts, nuts, flare nuts, pen tips, insert nuts, cap nuts, nipples, spacers, and screws, and the present invention relates to a Cu-Zn-Si-Pb-P alloy continuous cast wire rod used for these parts to be subjected to machining.

Priority is claimed on Japanese Patent Application No. 2023-190352, filed November 7, 2023, the content of which is incorporated herein by reference.

BACKGROUND ART

In the related art, a Cu-Zn-Pb alloy (so-called free-cutting brass rod, brass for forging, or brass for casting) or a Cu-Sn-Zn-Pb alloy (so-called leaded red brass) having excellent machinability has been generally used for equipment and parts related to drinking water and sanitary facilities, automobile parts, electrical /home appliance parts, mechanical parts, stationery, instrument parts, medical parts, and equipment and parts related to liquids or gases such as drinking water, industrial water, drainage, and hydrogen; specific names of the parts include faucets, water supply cocks, mixing valves, stopcocks, valves, cocks, fittings, valve mechanisms, and water meters.

Here, the composition of the Cu-Zn-Pb alloy contains, for example, 56 to 70 mass% of Cu and 1 to 4 mass% of Pb, with Zn as the balance. In addition, the composition of the Cu-Sn-Zn-Pb alloy contains, for example, 80 to 88 mass% of Cu, 1 to 8 mass% of Sn, and 1 to 8 mass% of Pb, with Zn as the balance.

However, in recent years, concerns have been raised regarding the effects of Pb on a human body and an environment, leading to a growing movement to regulate Pb in various countries. For example, in California, USA, a regulation has been in effect since January 2010 that limits the Pb content in drinking water equipment and the like to 0.25 mass% or less. In countries other than the USA, the regulatory movements are also accelerating, and there is a demand for the development of a copper alloy material that complies with the regulation of the Pb content.

In addition, in other industrial fields, such as automobiles, electric and electronic devices, and machinery, for example, the Pb content in a free-cutting copper alloy is exceptionally permitted up to 4 mass% under the European ELV and RoHS directives, but as in the drinking water sector, the strengthening of the regulation on the Pb content, including the abolition of such exemptions, is being actively discussed.

Therefore, in order to ensure excellent free-cutting properties even when the Pb content is limited to 0.25 mass% or less, a Cu-Zn-Si alloy (see, for example, Patent Document 1), a Cu-Zn-Si-Pb-P-based alloy (see, for example, Patent Document 2), and the like have been proposed, in which a crystal structure is controlled to have excellent machinability performance instead of Pb.

Incidentally, when the various parts described above are manufactured using a copper alloy as a material, a rod material or a wire material having various sections may be used as a material for machining.

A rod material or a wire material is typically produced by hot extruding or rolling a large-scale ingot into a rod material, followed by plastic working such as drawing. However, when producing a rod material by performing extrusion or rolling, it is necessary to perform numerous steps such as a casting step of manufacturing a large-scale ingot, a heating step of heating the ingot, and an extrusion or rolling step of extruding the heated ingot, resulting in significant manufacturing costs and time.

Therefore, as a method for efficiently producing a metal rod material or wire material at low cost, for example, as disclosed in Patent Documents 3 to 6, a continuous casting method of installing a mold in a casting furnace in which molten metal is stored and continuously casting a bar-shaped ingot is provided. As the above-described mold, a mold having self-lubricity, such as graphite, is typically used.

Citation List

Patent Documents

Patent Document 1: Japanese Unexamined Patent Application, First Publication No. 2000-119775
Patent Document 2: PCT International Publication No. WO2013/065830

Patent Document 3: Japanese Unexamined Patent Application, First Publication No. H05-169197
Patent Document 4: Japanese Unexamined Patent Application, First Publication No. H08-168852
Patent Document 5: Japanese Unexamined Patent Application, First Publication No. H05-031561
Patent Document 6: Japanese Unexamined Patent Application, First Publication No. 2014-091147

## SUMMARY OF INVENTION

### Technical Problem

Incidentally, when a Cu-Zn-Si-Pb-P-based alloy is continuously cast as disclosed in Patent Documents 3 to 6, the following problems have arisen.

(1) Casting problems such as occurrence of shrinkage cavities during casting.
(2) A decrease in cold workability due to the presence of coarse dendrites and the excessive formation of a $\gamma$ phase by a heat treatment.
(3) A decrease in mechanical characteristics (elongation and strength) due to the residual cast structure or coarse grains at a final wire diameter.
(4) Segregation of Sn or the like.
(5) Grain boundary cracking due to Pb and Bi segregated at grain boundaries.
(6) Due to a wide solidification temperature range, casting defects such as shell breakout during casting are likely to occur.
(7) Due to the inclusion of Zn, Si, and the like, the thermal conductivity decreases, which tends to result in insufficient cooling during casting and a higher susceptibility to casting defects.
(8) A decrease in heat removal capacity of the mold due to adhesion of Zn and an increase in casting surface cracks due to an increase in restraining force during drawing.

Because of the risk of the above-mentioned various problems, it has been difficult to stably and continuously cast a wire rod made of a high-quality Cu-Zn-Si-Pb-P-based alloy with few defects.
In addition, in the Cu-Zn-Si-Pb-P-based alloy, there is a demand for improvement in mechanical characteristics (strength and elongation) and machinability as compared with the related art.
The present invention has been made in view of the above-described circumstances, and an objective of the present invention is to provide a high-quality Cu-Zn-Si-Pb-P-based alloy continuous cast wire rod having excellent strength, elongation, and machinability and having few defects.

### Solution to Problem

In order to solve the above-described problems, according to Aspect 1 of the present invention, there is provided a Cu-Zn-Si-Pb-P-based alloy continuous cast wire rod including: Cu in an amount of more than 60.0 mass% and less than 65.0 mass%; Si in a range of 0.40 mass% or more and 1.20 mass% or less; Pb in a range of 0.002 mass% or more and 0.250 mass% or less; P in a range of 0.040 mass% or more and 0.190 mass% or less; and Bi as an optional element in an amount of 0.001 mass% or more and 0.100 mass% or less, with a balance being Zn and impurities, in which, among the impurities, a total content of Fe, Mn, Co, and Cr is 0.450 mass% or less, and a total content of Sn and Al is 0.30 mass% or less, and in a cross section orthogonal to a casting direction, an area ratio of an $\alpha$ phase to a $\beta$ phase is $\alpha$:$\beta$ = 40 to 70:60 to 30, an area rate of a $\gamma$ phase is 0.1% or less, and an area rate of a fine $\alpha$ phase with a grain size of 10 $\mu$m or less is 30% or more and 60% or less.
In the Cu-Zn-Si-Pb-P-based alloy continuous cast wire rod according to Aspect 1 of the present invention, a component composition is specified as described above, and, in a cross section orthogonal to a casting direction, an area ratio of an $\alpha$ phase to a $\beta$ phase is $\alpha$:$\beta$ = 40 to 70:60 to 30, an area rate of a $\gamma$ phase is 0.1% or less, and an area rate of a fine $\alpha$ phase with a grain size of 10 $\mu$m or less is 30% or more and 60% or less. Therefore, the Cu-Zn-Si-Pb-P-based alloy continuous cast wire rod has excellent mechanical characteristics (strength, elongation) and machinability, and has few manufacturing defects and is of excellent quality. In addition, the Cu-Zn-Si-Pb-P-based alloy continuous cast wire rod can be stably produced by continuous casting.
According to Aspect 2 of the present invention, in the Cu-Zn-Si-Pb-P-based alloy continuous cast wire rod according to Aspect 1 of the present invention, a tensile strength is 450 MPa or more and 600 MPa or less, and an elongation is 12% or more and 35% or less.
With the Cu-Zn-Si-Pb-P-based alloy continuous cast wire rod according to Aspect 2 of the present invention, the tensile strength is 450 MPa or more and 600 MPa or less, and the elongation is 12% or more and 35% or less, so that the strength and the ductility are excellent. Therefore, the Cu-Zn-Si-Pb-P-based alloy continuous cast wire rod is particularly

suitable as a material for various parts.

According to Aspect 3 of the present invention, in the Cu-Zn-Si-Pb-P-based alloy continuous cast wire rod according to Aspect 1 or Aspect 2 of the present invention, in a case where performing circumferential cutting of a machined test material with a diameter of 14 mm using a lathe equipped with an ISO-classified K10 carbide tool under following conditions (dry): a rake angle of 0°, a nose radius of 0.4 mm, a clearance angle of 6°, a cutting speed of 40 m/min, a depth of cut of 1.0 mm, and a feed rate of 0.11 mm/rev., a machinability index is 90 or more, the machinability index being a relative value of a cutting resistance calculated by Equation (1) based on measurement values obtained by a dynamometer attached to the tool, with a cutting resistance of a commercially available free-cutting brass rod C3604 made of a Zn-59 mass% Cu-3 mass% Pb-0.2 mass% Fe-0.3 mass% Sn alloy being taken as 100.

$$\text{cutting resistance} = ((\text{principal force})^2 + (\text{feed force})^2 + (\text{back force})^2)^{1/2} \qquad \text{Equation (1):}$$

With the Cu-Zn-Si-Pb-P-based alloy continuous cast wire rod according to Aspect 3 of the present invention, the machinability index, which is a relative value with the cutting resistance of C3604 being taken as 100, is 90 or more, so that the machinability is excellent.

According to Aspect 4 of the present invention, in the Cu-Zn-Si-Pb-P-based alloy continuous cast wire rod according to any one of Aspect 1 to Aspect 3 of the present invention, in a case where performing circumferential cutting of a machined test material with a diameter of 14 mm using a lathe equipped with an ISO-classified K10 carbide tool under following conditions (dry): a rake angle of 0°, a nose radius of 0.4 mm, a clearance angle of 6°, a cutting speed of 110 m/min, a depth of cut of 1.0 mm, and a feed rate of 0.21 mm/rev., a machinability index is 60 or more the machinability index being a relative value of a cutting resistance calculated by Equation (1) based on measurement values obtained by a dynamometer attached to the tool, with a cutting resistance of a commercially available free-cutting brass rod C3604 made of a Zn-59 mass% Cu-3 mass% Pb-0.2 mass% Fe-0.3 mass% Sn alloy being taken as 100.

$$\text{cutting resistance} = ((\text{principal force})^2 + (\text{feed force})^2 + (\text{back force})^2)^{1/2} \qquad \text{Equation (1):}$$

With the Cu-Zn-Si-Pb-P-based alloy continuous cast wire rod according to Aspect 4 of the present invention, even in a case where machining is performed under severe conditions, the machinability index, which is a relative value with the cutting resistance of C3604 being taken as 100, is 60 or more, so that the machinability is sufficiently excellent.

According to Aspect 5 of the present invention, in the Cu-Zn-Si-Pb-P-based alloy continuous cast wire rod according to any one of Aspect 1 to Aspect 4 of the present invention, after a heat treatment including holding at 450°C for 120 minutes followed by air cooling is performed, in constituent phases of a metal microstructure, the area rate of the $\gamma$ phase is 0.1% or less, and the area rate of the fine $\alpha$ phase with a grain size of 10 $\mu$m or less is 30% or more and 60% or less.

With the Cu-Zn-Si-Pb-P-based alloy continuous cast wire rod according to Aspect 5 of the present invention, even in a case where the heat treatment including holding at 450°C for 120 minutes followed by air cooling is performed, the area rate of the $\gamma$ phase is limited to 0.1% or less, and the area rate of the fine $\alpha$ phase with a grain size of 10 $\mu$m or less is 30% or more and 60% or less, so that the heat resistance and the ductility are sufficiently excellent.

According to Aspect 6 of the present invention, in the Cu-Zn-Si-Pb-P-based alloy continuous cast wire rod according to any one of Aspect 1 to Aspect 5 of the present invention, after a heat treatment including holding at 475°C for 120 minutes followed by air cooling is performed, a tensile strength is 400 MPa or more and 550 MPa or less, and an elongation is 14% or more and 38% or less.

With the Cu-Zn-Si-Pb-P-based alloy continuous cast wire rod according to Aspect 6 of the present invention, even in a case where the heat treatment including holding at 475°C for 120 minutes followed by air cooling is performed, the tensile strength is 400 MPa or more and 550 MPa or less, and the elongation is 14% or more and 38% or less, so that the heat resistance and the mechanical characteristics are sufficiently excellent.

According to Aspect 7 of the present invention, in the Cu-Zn-Si-Pb-P-based alloy continuous cast wire rod according to any one of Aspect 1 to Aspect 6 of the present invention, after a heat treatment including holding at 475°C for 120 minutes followed by air cooling is performed, in a case where performing circumferential cutting of a machined test material with a diameter of 14 mm using a lathe equipped with an ISO-classified K10 carbide tool under following conditions (dry): a rake angle of 0°, a nose radius of 0.4 mm, a clearance angle of 6°, a cutting speed of 40 m/min, a depth of cut of 1.0 mm, and a feed rate of 0.11 mm/rev., a machinability index is 80 or more, the machinability index being a relative value of a cutting resistance calculated by Equation (1) based on measurement values obtained by a dynamometer attached to the tool, with a cutting resistance of a commercially available free-cutting brass rod C3604 made of a Zn-59 mass% Cu-3 mass% Pb-0.2 mass% Fe-0.3 mass% Sn alloy being taken as 100.

$$\text{cutting resistance} = ((\text{principal force})^2 + (\text{feed force})^2 + (\text{back force})^2)^{1/2} \qquad \text{Equation (1):}$$

With the Cu-Zn-Si-Pb-P-based alloy continuous cast wire rod according to Aspect 7 of the present invention, even in a case where the heat treatment including holding at 475°C for 120 minutes followed by air cooling is performed, the above-described machinability index is set to be 80 or more, so that the heat resistance and the machinability are sufficiently excellent.

According to Aspect 8 of the present invention, in the Cu-Zn-Si-Pb-P-based alloy continuous cast wire rod according to any one of Aspect 1 to Aspect 7 of the present invention, after a heat treatment including holding at 475°C for 120 minutes followed by air cooling is performed, a maximum possible cold drawing area reduction rate until wire breakage is 50% or more.

With the Cu-Zn-Si-Pb-P-based alloy continuous cast wire rod according to Aspect 8 of the present invention, even in a case where the heat treatment including holding at 475°C for 120 minutes followed by air cooling is performed, the maximum possible cold drawing area reduction rate until wire breakage is set to 50% or more, so that the heat resistance and the workability are sufficiently excellent.

According to Aspect 9 of the present invention, in the Cu-Zn-Si-Pb-P-based alloy continuous cast wire rod according to any one of Aspect 1 to Aspect 8 of the present invention, after a heat treatment including holding at 600°C for 120 minutes followed by air cooling is performed, the area rate of the fine α phase with a grain size of 10 μm or less is 10% or more and 20% or less.

With the Cu-Zn-Si-Pb-P-based alloy continuous cast wire rod according to Aspect 9 of the present invention, even in a case where the heat treatment including holding at 600°C for 120 minutes followed by air cooling is performed, in the cross section orthogonal to the casting direction, the area rate of the fine α phase with a grain size of 10 μm or less is set to 10% or more and 20% or less, so that the heat resistance and the strength are further excellent.

According to Aspect 10 of the present invention, in the Cu-Zn-Si-Pb-P-based alloy continuous cast wire rod according to any one of Aspect 1 to Aspect 9 of the present invention, in the cross section orthogonal to the casting direction, an average crystal grain size of the β phase is 500 μm or less, exhibiting a crystal structure in which dendrites and columnar crystals are fragmented, and in a case where a portion having a maximum length of the α phase is defined as a major axis and a portion having a maximum length orthogonal to the major axis is defined as a minor axis, a ratio L1/L2 of a major axis length L1 to a minor axis length L2 is in a range of 1 to 4, and the α phase has a substantially circular shape, an elliptical shape, or a polygonal shape.

With the Cu-Zn-Si-Pb-P-based alloy continuous cast wire rod according to Aspect 10 of the present invention, since the β phase and the α phase are specified as described above, the strength, the ductility, and the machinability are further excellent.

According to Aspect 11 of the present invention, in the Cu-Zn-Si-Pb-P-based alloy continuous cast wire rod according to any one of Aspect 1 to Aspect 10 of the present invention, an oscillation mark depth is less than 50 μm.

With the Cu-Zn-Si-Pb-P-based alloy continuous cast wire rod according to Aspect 11 of the present invention, since the oscillation mark depth is set to less than 50 μm, there are few defects during casting and the quality is excellent.

According to Aspect 12 of the present invention, in the Cu-Zn-Si-Pb-P-based alloy continuous cast wire rod according to any one of Aspect 1 to Aspect 11 of the present invention, a cross sectional area of the cross section orthogonal to the casting direction is in a range of 12 $mm^2$ or more and 227 $mm^2$ or less.

With the Cu-Zn-Si-Pb-P-based alloy continuous cast wire rod according to Aspect 12 of the present invention, since the cross sectional area of the cross section orthogonal to the casting direction is set to be in the range of 12 $mm^2$ or more and 227 $mm^2$ or less, various parts can be efficiently manufactured.

Advantageous Effects of Invention

According to the present invention, it is possible to provide a high-quality Cu-Zn-Si-Pb-P-based alloy continuous cast wire rod having excellent strength, elongation, and machinability and having few defects.

BRIEF DESCRIPTION OF DRAWINGS

[FIG. 1] An explanatory diagram showing an example of a continuous casting apparatus used when producing a Cu-Zn-Si-Pb-P-based alloy continuous cast wire rod according to an embodiment of the present invention.
[FIG. 2A] A microstructure observation photograph of a continuous cast wire rod in Present Invention Example 11.
[FIG. 2B] A microstructure observation photograph of a continuous cast wire rod in Comparative Example 9.
[FIG. 3A] A diagram in which a γ phase and other phases observed in the microstructure observation photographs of FIGS. 2A and 2B are binarized.
[FIG. 3B] A diagram in which a γ phase and other phases observed in the microstructure observation photographs of

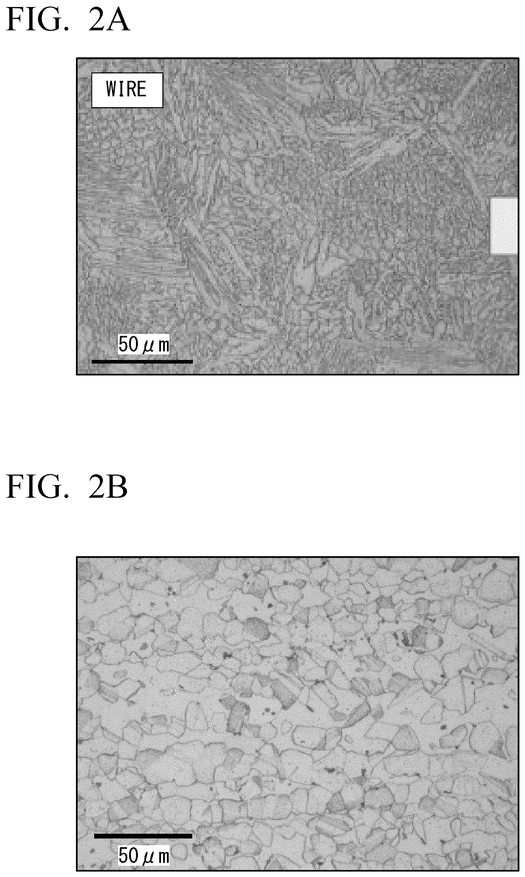

FIGS. 2A and 2B are binarized.

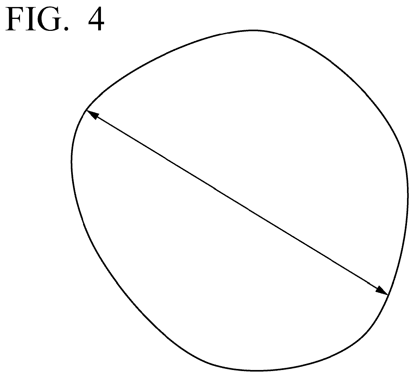

[FIG. 4] A diagram showing a method of measuring a crystal grain size of α-phase grains.

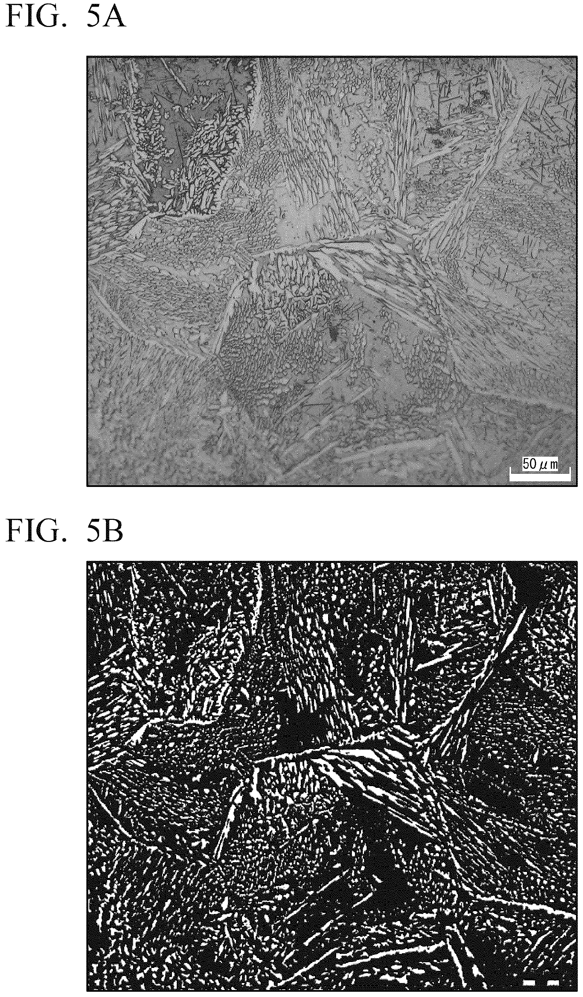

[FIG. 5A] A diagram showing a measurement example of an area rate of an α phase in Examples.

[FIG. 5B] A diagram showing a measurement example of an area rate of an α phase in Examples.

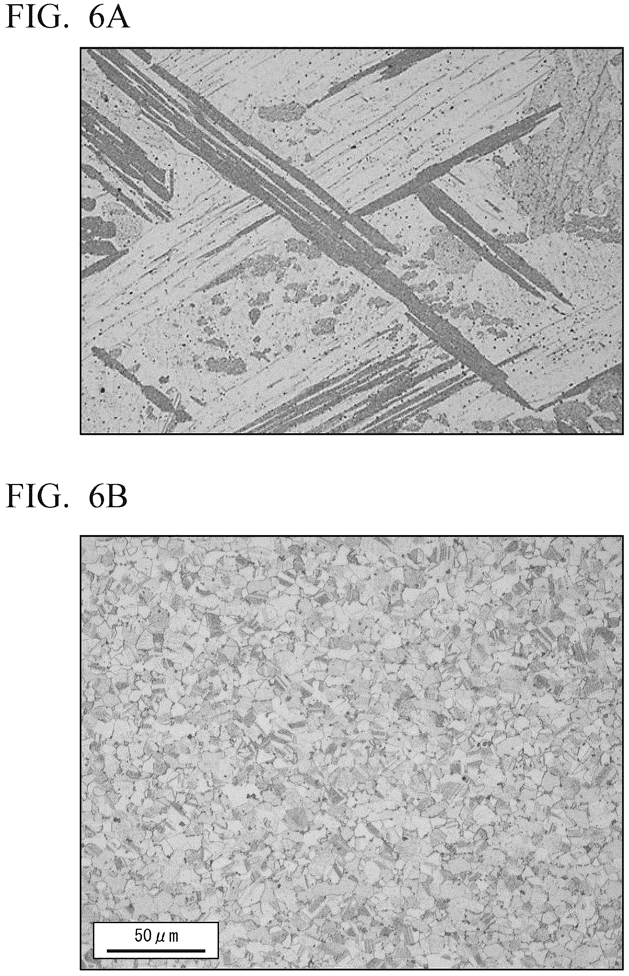

[FIG. 6A] A microstructure observation photograph after a heat treatment of the continuous cast wire rod in Present Invention Example 11.

[FIG. 6B] A microstructure observation photograph after a heat treatment of the continuous cast wire rod in Comparative Example 9.

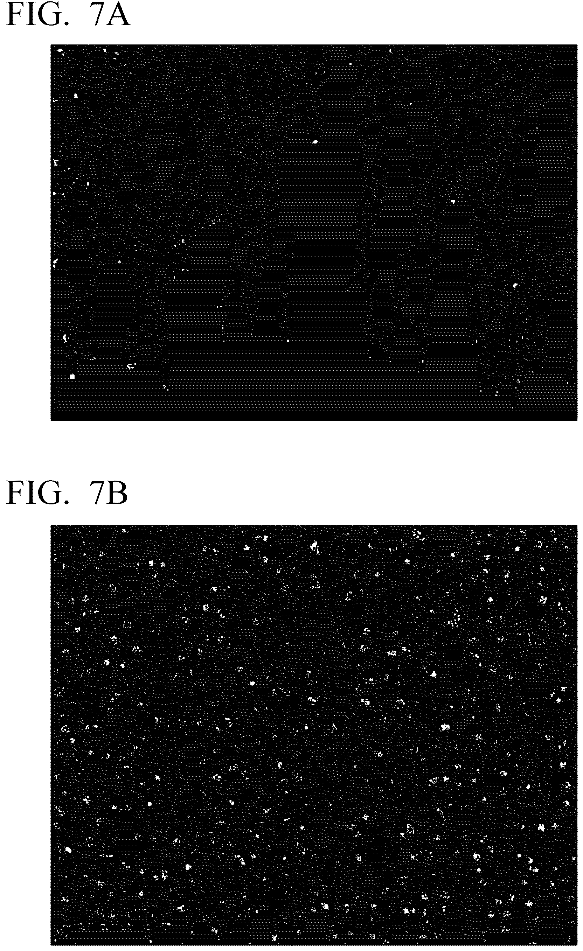

[FIG. 7A] A diagram in which a γ phase and other phases observed in the microstructure observation photographs of FIGS. 6A and 6B are binarized.

[FIG. 7B] A diagram in which a γ phase and other phases observed in the microstructure observation photographs of FIGS. 6A and 6B are binarized.

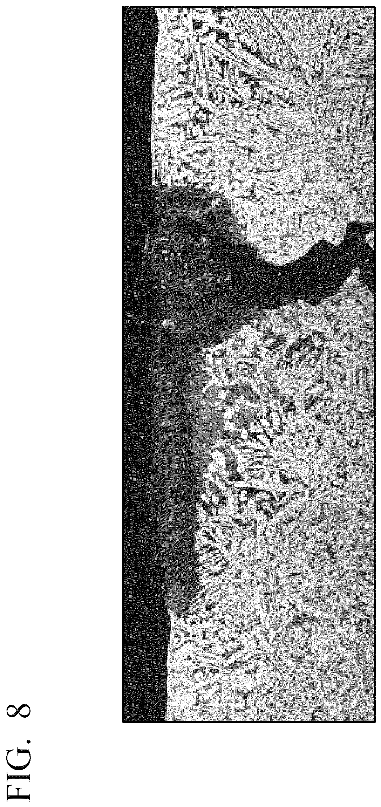

[FIG. 8] An explanatory diagram of an oscillation depth and a discolored portion in Examples.

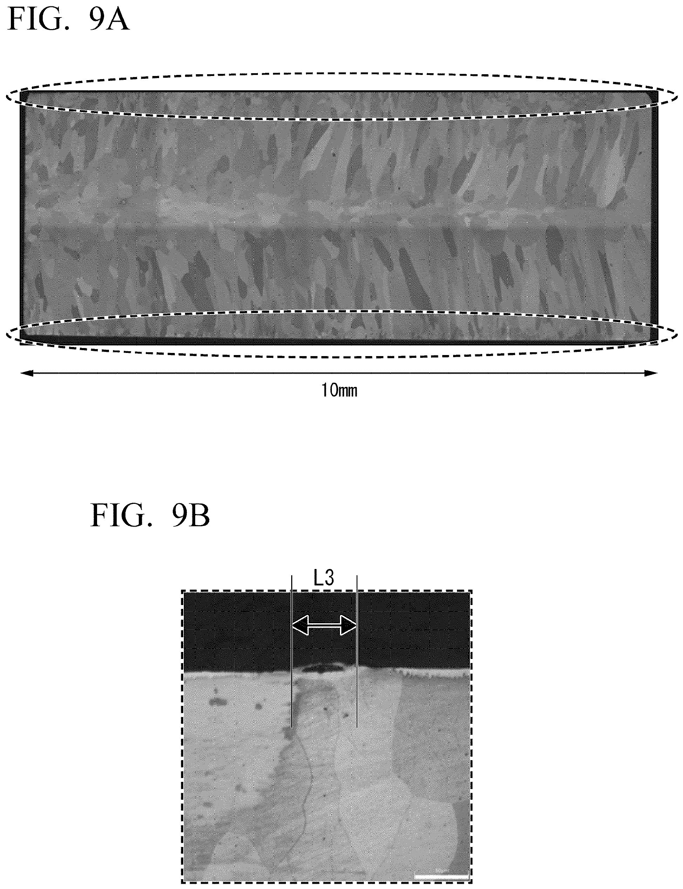

[FIG. 9A] A diagram showing a measurement example of a length of the discolored portion in Examples.

[FIG. 9B] A diagram showing a measurement example of a length of the discolored portion in Examples.

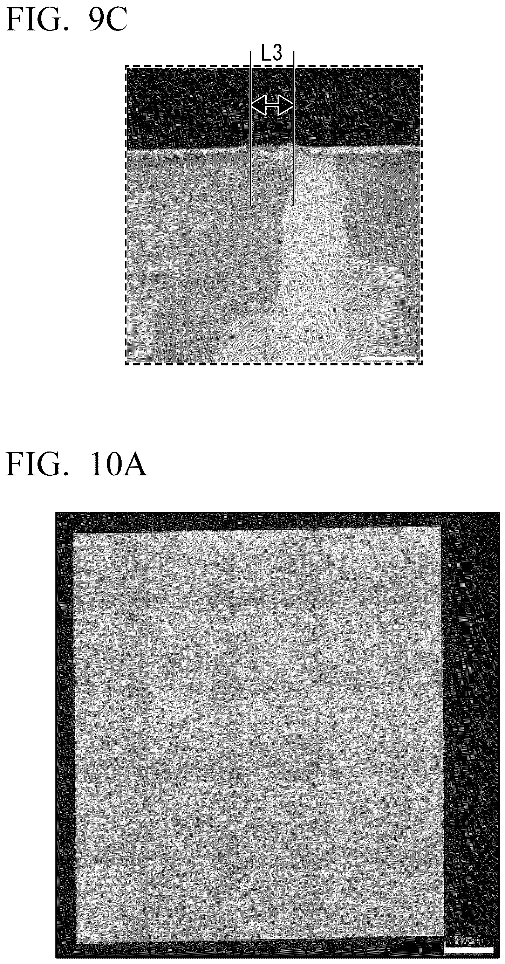

[FIG. 9C] A diagram showing a measurement example of a length of the discolored portion in Examples.

[FIG. 10A] A diagram showing a measurement example of an average crystal grain size of a β phase in Examples.

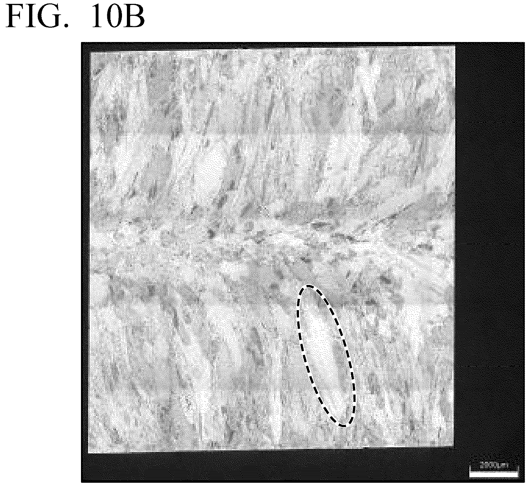

[FIG. 10B] A diagram showing a measurement example of an average crystal grain size of a β phase in Examples.

## DESCRIPTION OF EMBODIMENTS

Hereinafter, a Cu-Zn-Si-Pb-P-based alloy continuous cast wire rod according to an embodiment of the present invention will be described.

The Cu-Zn-Si-Pb-P-based alloy continuous cast wire rod according to the embodiment of the present invention is used as a material for various parts, including equipment and fixtures related to drinking water and sanitary facilities, musical instruments, tableware, electric/electrical appliances/electronic device parts, automobile parts, mechanical parts, stationery, precision mechanical parts, medical parts, and equipment and parts related to liquids or gases such as drinking water, industrial water, drainage, and hydrogen; specific names of the parts include water supply cocks, mixing valves, stopcocks, valves, cocks, fittings, water meters, gears, sensors, nuts, and screws.

The Cu-Zn-Si-Pb-P-based alloy continuous cast wire rod according to the present embodiment has a composition including: Cu in an amount of more than 60.0 mass% and less than 65.0 mass%; Si in a range of 0.40 mass% or more and 1.20 mass% or less; Pb in a range of 0.002 mass% or more and 0.250 mass% or less; P in a range of 0.040 mass% or more and 0.190 mass% or less; and Bi as an optional element in an amount of 0.001 mass% or more and 0.100 mass% or less, with a balance being Zn and impurities.

In addition, among the impurities, a total content of Fe, Mn, Co, and Cr is set to 0.450 mass% or less, and a total content of Sn and Al is set to 0.30 mass% or less.

In a cross section orthogonal to a casting direction, an area ratio of an α phase to a β phase is set to α:β = 40 to 70:60 to 30, an area rate of a γ phase is set to 0.1% or less, and an area rate of a fine α phase with a grain size of 10 μm or less is set to 30% or more and 60% or less.

In addition, in the present embodiment, it is preferable that, in the cross section orthogonal to the casting direction, an average crystal grain size of the β phase be 500 μm or less, exhibiting a crystal structure in which dendrites and columnar crystals are fragmented, and when a portion having a maximum length of the α phase is defined as a major axis and a portion having a maximum length orthogonal to the major axis is defined as a minor axis, a ratio L1/L2 of a major axis length L1 to a minor axis length L2 be in a range of 1 to 4, and the α phase have a substantially circular shape, an elliptical shape, or a polygonal shape.

In addition, in the present embodiment, it is preferable that a tensile strength be in a range of 450 MPa or more and 600 MPa or less and an elongation be in a range of 12% or more and 35% or less.

Further, in the present embodiment, it is preferable that, when performing circumferential cutting of a machined test material with a diameter of 14 mm using a lathe equipped with an ISO-classified K10 carbide tool under following conditions (dry): a rake angle of 0°, a nose radius of 0.4 mm, a clearance angle of 6°, a cutting speed of 40 m/min, a depth of cut of 1.0 mm, and a feed rate of 0.11 mm/rev., a machinability index, which is a relative value of a cutting resistance calculated by Equation (1) based on measurement values obtained by a dynamometer attached to the tool, with a cutting resistance of a commercially available free-cutting brass rod C3604 made of a Zn-59 mass% Cu-3 mass% Pb-0.2 mass% Fe-0.3 mass% Sn alloy being taken as 100, be set to 90 or more.

$$\text{cutting resistance} = ((\text{principal force})^2 + (\text{feed force})^2 + (\text{back force})^2)^{1/2} \qquad \text{Equation (1):}$$

In addition, in the present embodiment, it is preferable that, when cutting is performed under severe conditions of a cutting speed of 110 m/min and a feed rate of 0.11 mm/rev., the machinability index described above be set to 60 or more.
Further, in the present embodiment, it is preferable that after a heat treatment including holding at 450°C for 120 minutes followed by air cooling is performed, the area rate of the γ phase be 0.1% or less.
In addition, it is preferable that after the heat treatment including holding at 450°C for 120 minutes followed by air cooling is performed, in the cross section orthogonal to the casting direction, the area rate of the fine α phase with a grain size of 10 μm or less be 30% or more and 60% or less.
Further, in the present embodiment, it is preferable that after a heat treatment including holding at 600°C for 120 minutes followed by air cooling is performed, in the cross section orthogonal to the casting direction, the area rate of the fine α phase with a grain size of 10 μm or less be 10% or more and 20% or less.
In addition, in the present embodiment, it is preferable that after a heat treatment including holding at 475°C for 120 minutes followed by air cooling is performed, a tensile strength be 400 MPa or more and 550 MPa or less and an elongation be 14% or more and 38% or less.
Further, in the present embodiment, it is preferable that after the heat treatment including holding at 475°C for 120 minutes followed by air cooling is performed, the machinability index described above be set to 80 or more when performing cutting under following conditions (dry): a rake angle of 0°, a nose radius of 0.4 mm, a clearance angle of 6°, a cutting speed of 40 m/min, a depth of cut of 1.0 mm, and a feed rate of 0.11 mm/rev.
In addition, in the present embodiment, it is preferable that after the heat treatment including holding at 475°C for 120 minutes followed by air cooling is performed, a maximum possible cold drawing area reduction rate until wire breakage be 50% or more.
Further, in the present embodiment, it is preferable that an oscillation mark depth be less than 50 μm.
In addition, in the present embodiment, it is preferable that a cross sectional area of the cross section orthogonal to the casting direction be in a range of 12 $mm^2$ or more and 227 $mm^2$ or less.
Hereinafter, the reasons for specifying the composition, the metal microstructure, the mechanical characteristics and the machinability of the continuous cast wire rod, the metal microstructure after the heat treatment, and the mechanical characteristics and the machinability after the heat treatment as described above will be described.

(Cu)

When the Cu content is less than 60.00 mass%, the proportion of the β phase may exceed 80% and the ductility may decrease depending on the Si, Zn, P, and Pb contents and the manufacturing process. In addition, by increasing the Cu content, the dezincification corrosion resistance, stress corrosion cracking resistance, and cold workability can be improved. Further, in a case where the Cu content is low, the thermal conductivity of the alloy decreases, which may cause a decrease in cooling performance and result in the occurrence of casting defects.
On the other hand, in a case where the Cu content is more than 65.00 mass%, the proportion of the β phase decreases and the proportion of the γ phase increases depending on the Si, Zn, P, and Pb contents and the manufacturing process. Note that excessive addition of Cu decreases the hot deformability and the strength.
Therefore, in the present embodiment, the Cu content is set in a range of 60.00 mass% or more and 65.00 mass% or less.
A lower limit of the Cu content is preferably 62.15 mass% or more, and more preferably 62.40 mass% or more. On the other hand, an upper limit of the Cu content is preferably 63.05 mass% or less, and more preferably 63.00 mass% or less.

(Si)

Si affects the formation of metal phases such as a κ phase, a γ phase, a μ phase, and a β phase. In addition, Si has an effect of improving the machinability, the strength, the high temperature deformability, the wear resistance, and the stress corrosion cracking resistance of the alloy of the present embodiment. Further, the inclusion of Si strengthens the alloy by providing solid solution strengthening to the α phase and the β phase, which also affects the ductility and toughness of the alloy. The inclusion of Si lowers the electrical conductivity of the α phase, but improves the electrical conductivity of the alloy by forming the β phase. Further, Si decreases the viscosity of the molten metal and improves the molten metal flowability, thereby improving the castability. The higher the Si concentration in the alloy, the higher the Si concentration contained in the β phase, thereby improving the machinability and the strength. Regarding the hot workability, the inclusion of Si increases the hot deformability of the α phase and the β phase in a temperature range exceeding 500°C and decreases the hot deformation resistance, and, as a result, it increases the hot deformability of the alloy and decreases the deformation resistance. In particular, when Si is contained in an amount of more than 0.400 mass%, the effect is remarkably exhibited.
On the other hand, when the Si content is too high, the γ phase becomes excessive. The γ phase has lower

ductility and toughness than the β phase, reducing the ductility of the alloy and, in some cases, increasing cutting resistance. An excess of the γ phase also deteriorates the thrust in drill cutting. While it depends on the manufacturing process and Cu concentration, maintaining the Si content at 1.20 mass% or less can suppress the amount of the γ phase while increasing the proportion of the β phase. This allows for excellent machinability and a superior balance between the strength and the ductility. In addition, the electrical conductivity of the alloy decreases as the Si content increases. This reduces the cooling performance during casting and can cause casting defects such as shell breakage. Further, although it depends on the balance between Cu and Zn, the excessive Si content widens a solidification temperature range and deteriorates castability. Further, a wider temperature range of a solid-liquid coexisting phase causes Si to react with a mold, leading to the formation of Si-containing deposits on an inner wall of the mold. The formation of these deposits decreases the heat removal capacity of the mold.

Therefore, in the present embodiment, the Si content is set in a range of 0.40 mass% or more and 1.20 mass% or less.

A lower limit of the Si content is preferably 0.90 mass% or more, and more preferably 0.93 mass% or more. On the other hand, an upper limit of the Si content is preferably 1.00 mass% or less, and more preferably 0.97 mass% or less.

(Pb)

By including a small amount of Pb and allowing a small amount of Pb particles to be present in the metal microstructure, the machinability is further improved. In the composition of the present embodiment, about 0.002 mass% of Pb forms solid solutions in the matrix, while any amount exceeding this does not form solid solutions but disperses as Pb particles with a diameter of about 0.1 to 3 μm. These particles function as so-called chip breakers, thereby improving the machinability. Even a small amount of Pb is effective in improving the machinability.

On the other hand, when Pb is contained in an amount more than necessary, the machined surface becomes rough, the hot workability (for example, forgeability) deteriorates, and the cold ductility also deteriorates. In addition, it becomes prone to causing grain boundary cracking during casting, starting from Pb segregated at grain boundaries. Further, due to the low strength of Pb, the strength and the fatigue resistance decrease.

Therefore, in the present embodiment, the Pb content is set in a range of 0.002 mass% or more and 0.250 mass% or less.

A lower limit of the Pb content is preferably 0.055 mass% or more, and more preferably 0.080 mass% or more. On the other hand, an upper limit of the Pb content is preferably 0.200 mass% or less, and more preferably 0.150 mass% or less.

(P)

As P forms solid solutions in the β phase and its amount increases, the machinability of the β phase, that is, the chip partibility of the β phase (partibility of chips) is improved, the cutting resistance can be reduced, thereby achieving excellent machinability of the alloy. Further, depending on the P content and the manufacturing process, P-containing compounds with an average diameter of approximately 0.5 to 3 μm are formed within the β phase. In peripheral cutting, these compounds reduce three components of cutting force, that is, principal force, feed force, and back force, and, in drill cutting, these compounds significantly lower the torque in particular. The three components of cutting force in peripheral cutting, the torque in drill cutting, and the chip shape are interlinked; the lower the three components and torque, the more the chips are fragmented. That is, the machinability index is improved. Here, as the P content increases, a critical cooling rate for the formation of P-containing compounds increases, which facilitates the formation of the P-containing compounds. Further, P has an effect of refining the crystal grains of the α phase; by making the α phase finer, the machinability of the copper alloy casting is improved. In addition, the co-addition of P and Si promotes the presence of Bi-containing particles within the α phase, thereby contributing to the improvement of the machinability of the α phase.

On the other hand, when P is contained in an amount more than necessary, the precipitates become coarse, not only saturating the effect on the machinability but also decreasing the Si concentration in the β phase. This, in turn, worsens the machinability and deteriorates the ductility and toughness. In addition, the solidification temperature range widens, leading to decreased castability; this makes the ingot prone to surface or internal cracking during production and increases the likelihood of wire breakage during processing. Further, P reacts with the carbon mold to deteriorate the castability (deterioration of the casting surface or the like).

Therefore, in the present embodiment, the P content is set in a range of 0.040 mass% or more and 0.190 mass% or less.

A lower limit of the P content is preferably 0.055 mass% or more, and more preferably 0.070 mass% or more. On the other hand, an upper limit of the P content is preferably 0.150 mass% or less, and more preferably 0.100 mass% or less.

(Zn)

Zn is an element necessary for improving the machinability, the strength, the high temperature characteristics, and the castability. On the other hand, Zn adheres to an inner wall of the mold, which inhibits the self-lubricity of the graphite mold, and the seizing of the solidified shell tends to occur. Further, the adhered Zn may decrease the heat removal capacity of the mold, which may increase the risk of casting defects.
Therefore, in the present embodiment, Zn is the balance, and a lower limit of the Zn content is preferably 34.00 mass% or more, more preferably 34.80 mass% or more, and still more preferably 35.50 mass% or more. On the other hand, an upper limit of the Zn content is preferably 41.00 mass% or less, more preferably 36.80 mass% or less, and still more preferably 36.00 mass% or less.

(Optional Element: Bi)

Bi is contained as an optional element and is not an essential element. Bi is mainly positioned as a substitute for Pb. In a case where Bi is contained in the presence of Pb, Pb and Bi coexist in many cases, and particles where Pb and Bi coexist do not lose the effect on the machinability compared to Bi particles and Pb particles. The effects of Bi on the environment and human body are currently unclear, but are considered to be smaller than that of Pb. Therefore, by reducing the amount of Pb through the inclusion of Bi, the effects on the environment and human body can be mitigated. In addition, through the action of Si, Bi-containing particles can be preferentially located within the $\alpha$ phase, which improves the machinability of the $\alpha$ phase and provides another means to improve the machinability of the copper alloy casting. That is, as the frequency of Bi-containing particles present in the $\alpha$ phase increases, the machinability of the $\alpha$ phase is improved, and the effect of Bi-containing particles on improving the machinability eventually exceeds the effect of Pb particles on improving the machinability.
On the other hand, Bi has a property of making the copper alloy casting brittle. An upper limit of Bi needs to be determined by taking into account its effects on the environment and human body, the decrease in the ductility and toughness of the copper alloy casting, and the issue of cracking during casting production. In addition, grain boundary cracking starting from Bi segregated at the grain boundaries is likely to occur during casting. Since Bi has low strength, it causes a decrease in strength and fatigue resistance.
Therefore, in the present embodiment, when Bi is contained in order to further improve the machinability, the Bi content is set in a range of 0.001 mass% or more and 0.100 mass% or less. Of course, since Bi is an optional element, even in a case where Bi is contained in an amount of less than 0.001 mass%, the content is within the scope of the present invention.
A lower limit of the Bi content is preferably 0.020 mass% or more, and more preferably 0.025 mass% or more. On the other hand, an upper limit of the Bi content is preferably 0.040 mass% or less, and more preferably 0.030 mass% or less.

(Impurities: Fe, Mn, Co, and Cr)

Fe, Mn, Co, and Cr form solid solutions in the $\alpha$ phase, the $\beta$ phase, and the $\gamma$ phase of the Cu-Zn alloy up to a certain concentration, but, in a case where Si is present, Fe, Mn, Co, and Cr are likely to be combined with Si, and in some cases, Fe, Mn, Co, and Cr may be bonded to Si, which may consume effective Si for the machinability. Fe, Mn, Co, and Cr combined with Si form Fe-Si compounds, Mn-Si compounds, Co-Si compounds, and Cr-Si compounds in the metal microstructure. Since these intermetallic compounds are extremely hard, the ductility is decreased. Further, the cutting resistance may increase and the lifespan of the tool may be shortened.
Therefore, in the present embodiment, the total content of Fe, Mn, Co, and Cr, which are impurities, is set to less than 0.450 mass%.
The total content of Fe, Mn, Co, and Cr, which are impurities, is preferably less than 0.30 mass%, and more preferably less than 0.20 mass%.
Although not particularly limited, the total content of Fe, Mn, Co, and Cr, which are impurities, may be 0.001 mass% or more, 0.01 mass% or more, or 0.1 mass% or more.

(Impurities: Sn, Al)

"Sn and Al introduced from sources such as free-cutting brass or plated waste products promote the formation of the $\gamma$ phase in the alloy of the present embodiment, making them appear at first glance to be useful for the machinability. However, Sn and Al also change the original properties of the $\gamma$ phase formed of Cu, Zn, and Si. In addition, Sn and Al are distributed more in the $\beta$ phase than in the $\alpha$ phase, and change the properties of the $\beta$ phase. As a result, the ductility and toughness of the alloy may be decreased, and the machinability may be decreased.

When the Sn content is too high, the segregation of Sn becomes significant, leading to poor hot ductility and causing a decrease in cold workability and ductility. Furthermore, as the Sn content increases, the solidification temperature range widens; consequently, this results in decreased castability (occurrence of cracking, shrinkage cavities, and porosity) and impairs both hot workability and cold workability. In addition, when the Al content is too high, the elongation decreases.

Therefore, in the present embodiment, the total content of Sn and Al, which are impurities, is set to less than 0.300 mass%.

The total content of Sn and Al, which are impurities, is preferably less than 0.20 mass%, and more preferably less than 0.10 mass%.

In addition, the Sn content is preferably less than 0.300 mass%, and the Al content is preferably less than 0.200 mass%.

Although not particularly limited, the total content of Sn and Al, which are impurities, may be 0.001 mass% or more, 0.01 mass% or more, or 0.05 mass% or more.

(Impurities: Others)

Examples of impurities other than the above-described elements include Ag, B, Ca, Sc, rare earth elements (excluding Y and Sc), V, Nb, Ta, Mo, W, Re, Ru, Os, Rh, Ir, Ni, Pd, Pt, Au, Cd, Hg, Al, Ga, In, Ge, Sn, As, Sb, Tl, Be, N, C, Li, H, and O. Since these impurities may decrease various characteristics, the total content of these impurities is preferably less than 0.20 mass%, more preferably less than 0.15 mass%, and still more preferably 0.10 mass% or less.

(Ratio of α Phase to β Phase)

Since the α phase is soft, the ductility and the toughness are high, but the machinability is low. Even in a case where the α phase accounts for about 50% of the area rate, the soft α phase itself acts as a cushioning material, and, during cutting, an interface between the soft α phase and the hard β phase serves as a stress concentration source, which facilitates chip fragmentation. Therefore, it is considered that excellent machinability of a β single-phase alloy is maintained, and the machinability may even be improved. On the other hand, the β phase has high machinability, but low ductility and toughness. In addition, good conductivity can be obtained. Therefore, it is necessary to consider the ductility, the toughness, and the balance between the ductility and the strength of the alloy.

Therefore, in the present embodiment, the area ratio of the α phase and the β phase in the cross section orthogonal to the casting direction is set to α:β = 40 to 70:60 to 30.

(Area Rate of γ Phase)

Since the γ phase is hard and brittle, the presence of a small amount of the γ phase has a significant effect on improving the machinability; however, even when the amount of the γ phase is increased further, the improvement effect on machinability decreases. In addition, as a disadvantage of the γ phase, dezincification occurs starting from the γ phase. Since dezincification becomes the reason for the generation of holes in water pipe applications and the like, it is preferable that the proportion of the γ phase be small. Therefore, in order to make the balance between the ductility and the strength excellent, the γ phase has to be significantly limited.

Therefore, in the present embodiment, the area rate of the γ phase is set to 0.1% or less.

The area rate of the γ phase is preferably 0.08% or less. In addition, when the γ phase is not present, both the machinability and the strength are inferior; therefore, the area rate of the γ phase is preferably 0.01% or more.

(Area Rate of Fine α Phase)

As the crystal grain size of the α phase crystal grains becomes finer, the machinability and the mechanical properties become better. When the α phase crystal grains are granular and fine, the distribution of the α phase becomes uniform, causing the β phase to be fragmented as well. Therefore, in terms of cutting performance, strength, and ductility, the α phase acts as an effective cushioning material, or the phase boundaries between the α phase and β phase serve as stress concentration sources for chip fragmentation, resulting in chips that are even more fragmented than those of a β single-phase alloy. Therefore, when the proportion of the granular fine α phase crystal grains increases, the strength increases and the machinability also increases. On the other hand, considering the balance between the strength and the ductility, even when an excessive area rate of the fine α phase with a crystal grain size of 10 μm or less may lead to unnecessary elongation and a decrease in ductility.

Therefore, in the present embodiment, the area rate of the fine α phase with a grain size of 10 μm or less is set in a range of 30% or more and 60% or less.

A lower limit of the area rate of the fine α phase with a grain size of 10 μm or less is preferably 40% or more. An upper limit of the area rate of the fine α phase with a grain size of 10 μm or less is preferably 50% or less.

(Shapes of Fine α Phase and β Phase)

Regarding the effects of the shape and distribution of the α phase and the distribution of the β phase on the machinability and mechanical properties of the alloy, when the α phase crystal grains are acicular (elliptical with an aspect ratio of the crystal grains exceeding 4), the dispersion of the α phase deteriorates. Consequently, these acicular α phases with long major axes interfere with the cutting process. Furthermore, the β phase crystal grains surrounding the α phase become coarser, leading to poor dispersion of the β phase as well. Therefore, the strength of the alloy decreases.

Therefore, in the present embodiment, it is preferable that, when a portion having a maximum length of the α phase is defined as a major axis and a portion having a maximum length orthogonal to the major axis is defined as a minor axis, a ratio L1/L2 of a major axis length L1 to a minor axis length L2 be in a range of 1 to 4, and the α phase have a substantially circular shape, an elliptical shape, or a polygonal shape. In addition, it is preferable that the β phase have an average crystal grain size of 500 μm or less and have a structure in which dendrites and columnar crystals are fragmented.

Although not particularly limited, the average crystal grain size of the β phase may be 450 μm or less or 400 μm or less.

In addition, although not particularly limited, the average crystal grain size of the β phase may be 10 μm or more, 50 μm or more, or 100 μm or more.

(Strength and Elongation)

There is a strong demand for thinning and weight reduction for members and parts targeted by the present embodiment, including automobile parts. As for the required strength, the tensile strength is considered important, and the balance with the ductility is also important. In addition, by increasing the strength of the material, it is possible to achieve weight reduction of the component. Further, when the strength and elongation are too low, the cold drawability is poor. For the cold drawability, the balance between the strength and the elongation is important; in general, the strength and the ductility (cold drawability) are in a trade-off relationship. When the strength is too high, the elongation, which is important for the cold drawability, decreases.

Therefore, in the present embodiment, the tensile strength is set in a range of 450 MPa or more and 600 MPa or less, and the elongation is set in a range of 12% or more and 35% or less.

(Machinability)

In the present embodiment, as described above, the machinability is evaluated by a machinability index, which is a relative value in which a cutting resistance of a commercially available free-cutting brass rod C3604 (Zn-59 mass% Cu-3 mass% Pb-0.2 mass% Fe-0.3 mass% Sn alloy) is taken as 100. Here, when the machinability index is high, the machinability is high, and the lifespan of the tool is extended.

In the present embodiment, it is preferable that the machinability index be 90 or more when performing cutting using a lathe equipped with an ISO-classified K10 carbide tool under following conditions (dry): a rake angle of 0°, a nose radius of 0.4 mm, a clearance angle of 6°, a cutting speed of 40 m/min, a depth of cut of 1.0 mm, and a feed rate of 0.11 mm/rev.

Although not particularly limited, the machinability index may be 91 or more and 92 or more when performing cutting under following conditions (dry): a rake angle of 0°, a nose radius of 0.4 mm, a clearance angle of 6°, a cutting speed of 40 m/min, a depth of cut of 1.0 mm, and a feed rate of 0.11 mm/rev.

In addition, under more severe conditions of a cutting speed of 110 m/min and a feed rate of 0.21 mm/rev., the machinability index is preferably 60 or more.

Although not particularly limited, the machinability index under conditions of a cutting speed of 110 m/min and a feed rate of 0.21 mm/rev. may be 61 or more, or may be 62 or more.

(Metal Microstructure after Heat Treatment)

In the present embodiment, it is preferable that after a heat treatment including holding at 450°C for 120 minutes followed by air cooling is performed, in constituent phases of a metal microstructure, the area rate of the γ phase be set to 0.1% or less, and the area rate of the fine α phase with a grain size of 10 μm or less be set to 30% or more and 60% or less. Even after the heat treatment including holding at 450°C for 120 minutes is performed, the metal microstructure does not change significantly, and the characteristics such as the strength, the elongation, and the machinability are maintained. Therefore, the Cu-Zn-Si-Pb-P-based alloy continuous cast wire rod exhibits excellent heat resistance and is particularly

suitable as a material for parts used in a high-temperature environment.

In addition, it is preferable that after the heat treatment including holding at 600°C for 120 minutes followed by air cooling is performed, in the cross section orthogonal to the casting direction, the area rate of the fine $\alpha$ phase with a grain size of 10 $\mu$m or less be set to 10% or more and 20% or less. Even when held under higher temperature conditions, the area rate of the fine $\alpha$ phase with a grain size of 10 $\mu$m or less is ensured, and it is possible to secure certain characteristics.

(Strength, Elongation, and Machinability Index after Heat Treatment)

In the present embodiment, even when a heat treatment is performed at 475°C for 120 minutes, it is preferable that the strength be 400 to 550 MPa, the elongation be 14% to 38%, the machinability index be 80 or more under conditions of a cutting speed of 40 m/min, and a feed rate of 0.11 mm/rev., and the maximum possible cold drawing area reduction rate until wire breakage be 50%.

Although not particularly limited, after the heat treatment including holding at 475°C for 120 minutes followed by air cooling is performed, the maximum possible cold drawing area reduction rate until wire breakage may be 52% or more, or may be 55% or more.

When the heat treatment is performed, the strength decreases and the elongation increases. In the present embodiment, by limiting the chemical composition, the $\gamma$ phase (which is hard and brittle) is made difficult to be formed even after heat treatment. This makes it possible to improve the elongation and the cold workability without increasing the strength more than necessary.

(Oscillation Mark Depth)

In the present embodiment, it is preferable that the oscillation mark depth be less than 50 $\mu$m. The shallower the oscillation mark depth, the better the castability and, in particular, the surface quality. In addition, when surface peeling is performed to remove oscillation marks, it becomes possible to minimize the machining allowance.

Although not particularly limited, the oscillation mark depth may be less than 40 $\mu$m or less than 30 $\mu$m.

(Cross Sectional Area of Cross Section orthogonal to Casting Direction)

In the present embodiment, it is preferable that the cross sectional area of the cross section orthogonal to the casting direction be in a range of 12 $mm^2$ or more and 227 $mm^2$ or less.

By setting the cross sectional area of the cross section orthogonal to the casting direction to 12 $mm^2$ or more, the cooling rate during casting is prevented from becoming excessively high, enabling sufficient formation of the $\alpha$ phase. On the other hand, by setting the cross sectional area of the cross section orthogonal to the casting direction to 227 $mm^2$ or less, the cooling rate during casting is prevented from becoming excessively low, enabling sufficient refinement of the $\alpha$ phase. In addition, sufficient solidified shell strength can be ensured, the oscillation marks can be prevented from increasing due to the drawing stress applied during casting, and stable continuous casting can be performed.

Next, an example of a method for producing the Cu-Zn-Si-Pb-P-based alloy continuous cast wire rod according to the present embodiment will be described.

In the Cu-Zn-Si-Pb-P-based alloy continuous cast wire rod according to the present embodiment, continuous casting is performed using a continuous casting apparatus. Any of a vertical continuous casting apparatus that draws the continuous cast wire rod downward, a horizontal continuous casting apparatus that draws the continuous cast wire rod in a horizontal direction, or an up-drawing type continuous casting apparatus that draws the continuous cast wire rod upward can be applied.

Here, the vertical continuous casting apparatus and the horizontal continuous casting apparatus require an extensive floor space for equipment installation. In addition, when switching product types during casting, the molten metal in the crucible has to be discarded. On the other hand, the up-drawing type continuous casting apparatus utilizes a vertical space and has a compact design, eliminating the need for an extensive floor space or underground structures. Additionally, product changeovers can be accomplished simply by simply moving the mold to a different crucible, which enables multi-product casting and provides an advantage in production efficiency.

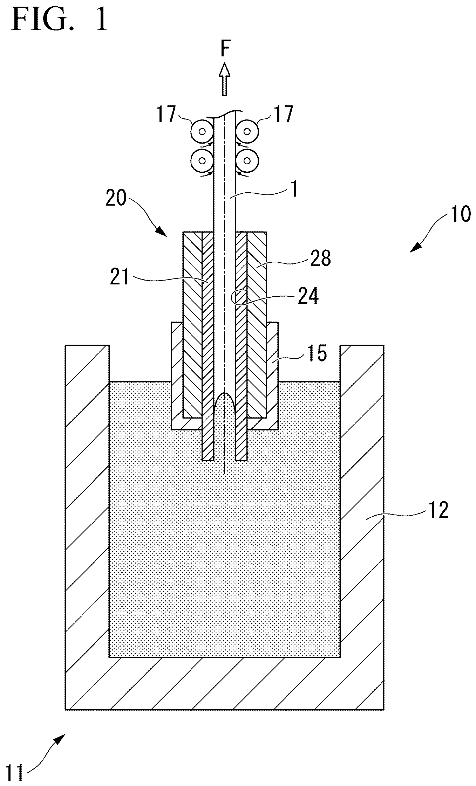

Therefore, in the present embodiment, the continuous casting will be described as being performed using an up-drawing type continuous casting apparatus 10 shown in FIG. 1.

The continuous casting apparatus 10 shown in FIG. 1 includes a casting furnace 11, a continuous casting mold 20 connected to the casting furnace 11, and pinch rolls 17 that draw a cast wire material 1 produced from the continuous casting mold 20.

The casting furnace 11 is a furnace that heats and dissolves a melting raw material to produce and hold molten copper with a predetermined composition, and includes a crucible 12 that holds the melting raw material and the molten copper, and heating means (not shown) that heats the crucible 12.

The pinch rolls 17 pinch the cast wire material 1 produced from the continuous casting mold 20 and draw the cast wire material 1 in a drawing direction F. In the present embodiment, the pinch rolls 17 are configured to intermittently draw out the cast wire material 1.

The continuous casting mold 20 includes a cylindrical mold 21 into which the supplied molten copper is injected, and a cooling unit 28 that cools the mold 21.

Here, in the present embodiment, as shown in FIG. 1, the continuous casting mold 20 is disposed on the molten copper in the casting furnace 11 via a fireproof insulation material 15, and is configured to draw the cast wire material 1 upward.

The mold 21 has a substantially cylindrical shape, and is provided with a casting hole 24 that penetrates from one side to the other side.

The cooling unit 28 is a water-cooling jacket disposed on an outer peripheral side of the mold 21, and is configured to cool the mold 21 by circulating cooling water.

First, a melting raw material is charged into the crucible 12 from a raw material input port of the casting furnace 11. As the raw material, pure metals such as Cu, Zn, and Sn, as well as Cu-Zn mother alloys and Cu-Sn mother alloys, can be used. In addition, a raw material containing Zn and Sn may be melted together with the copper raw material. A recycled material and a scrap material of the present alloy may also be used.

Next, the melting raw material charged into the crucible 12 is heated and melted by heating means to produce molten copper prepared to have the above-described component composition.

This molten copper is heated to a predetermined casting temperature in the crucible 12 and held therein. Then, this molten copper is supplied to the continuous casting mold 20.

The molten copper supplied into the continuous casting mold 20 is cooled and solidified in the mold 21 to become the cast wire material 1. The cast wire material 1 is intermittently drawn out by the pinch rolls 17, whereby the cast wire material 1 is continuously produced.

Here, a cooling rate during casting (cooling rate at which the molten metal is cooled from 1000°C to room temperature (25°C)) is preferably set in a range of 22 °C/sec or more and 75 °C/sec or less.

By setting the cooling rate to 22 °C/sec or more, it is possible to suppress the growth or coalescence of the $\alpha$ phase and to refine the $\alpha$ phase. On the other hand, by setting the cooling rate to 75 °C/sec or less, the $\alpha$ phase can be reliably formed.

In addition, the casting speed is preferably set in a range of 0.6 m/min or more and 3.3 m/min or less.

By setting the casting speed to 0.6 m/min or more, the cooling rate is prevented from becoming excessively high, and the $\alpha$-phase can be reliably formed. In addition, it is possible to suppress a decrease in fluidity due to an increase in a solid phase rate of the molten metal during drawing out, and it is possible to suppress the occurrence of misrun, deep oscillation marks, internal defects, and deep altered layers. On the other hand, by setting the casting speed to 3.3 m/min or less, the cooling rate is prevented from becoming excessively low, and the $\alpha$-phase can be reliably refined and formed. In addition, it is possible to suppress insufficient supply of the molten metal during drawing out, and it is possible to suppress the occurrence of deep oscillation marks and internal defects. In addition, a frictional force between the mold and the solidified shell during drawing out is prevented from becoming excessively high, and it is possible to suppress the breakout of the solidified shell and the formation of deep oscillation marks during drawing out.

With the Cu-Zn-Si-Pb-P-based alloy continuous cast wire rod according to the present embodiment having the above-described configuration, the Cu content is in a range of more than 60.0 mass% and less than 65.0 mass%, the Si content is in a range of 0.40 mass% or more and 1.20 mass% or less, the Pb content is in a range of 0.002 mass% or more and 0.250 mass% or less, the P content is in a range of 0.040 mass% or more and 0.190 mass% or less, and the Bi is contained as an optional element in a range of 0.001 mass% or more and 0.100 mass% or less, with a balance being Zn and impurities, in which, among the impurities, a total content of Fe, Mn, Co, and Cr is 0.450 mass% or less, and a total content of Sn and Al is 0.30 mass% or less, and in a cross section orthogonal to a casting direction, an area rate of a $\gamma$ phase is 0.1% or less, and an area rate of a fine $\alpha$ phase with a grain size of 10 $\mu$m or less is 30% or more and 60% or less. Therefore, the Cu-Zn-Si-Pb-P-based alloy continuous cast wire rod has excellent mechanical characteristics (strength, elongation) and machinability, and has few manufacturing defects and is of excellent quality. In addition, the Cu-Zn-Si-Pb-P-based alloy continuous cast wire rod can be stably produced by continuous casting.

In the present embodiment, when the area ratio of the $\alpha$ phase and the $\beta$ phase in the cross section orthogonal to the casting direction is $\alpha$:$\beta$ = 40 to 70:60 to 30, the ductility and toughness, and the strength and the machinability can be improved in a well-balanced manner.

In the present embodiment, when the tensile strength is 450 MPa or more and 600 MPa or less and the elongation is 12% or more and 35% or less, the strength and the ductility are excellent. Therefore, the Cu-Zn-Si-Pb-P-based alloy continuous cast wire rod is particularly suitable as a material for various parts.

In the present embodiment, when the machinability index is set to 90 or more when performing machining under conditions (dry) of a cutting speed of 40 m/min and a feed rate of 0.11 mm/rev., it is possible to ensure sufficient machinability even in a case where the Pb content is limited to 0.190 mass% or less.

In the present embodiment, when the machinability index is set to 60 or more when performing machining under conditions (dry) of a cutting speed of 110 m/min and a feed rate of 0.21 mm/rev., it is possible to perform cutting in a favorable manner even under more severe conditions.

In the present embodiment, after a heat treatment including holding at 450°C for 120 minutes followed by air cooling is performed, when, in constituent phases of a metal microstructure, the area rate of the $\gamma$ phase is 0.1% or less, and the area rate of the fine $\alpha$ phase with a grain size of 10 $\mu$m or less is 30% or more and 60% or less, the heat resistance and various characteristics are sufficiently excellent.

In addition, in the present embodiment, after a heat treatment including holding at 475°C for 120 minutes followed by air cooling is performed, when the tensile strength is 400 MPa or more and 550 MPa or less and the elongation is 14% or more and 38% or less, the heat resistance and the mechanical characteristics are sufficiently excellent.

In the present embodiment, after the heat treatment including holding at 475°C for 120 minutes followed by air cooling is performed, when the machinability index is set to 80 or more when performing machining under conditions (dry) of a cutting speed of 40 m/min and a feed rate of 0.11 mm/rev., the heat resistance and the machinability are sufficiently excellent.

In the present embodiment, after the heat treatment including holding at 475°C for 120 minutes followed by air cooling is performed, when the maximum possible cold drawing area reduction rate until wire breakage is 50% or more, the heat resistance and the workability are sufficiently excellent.

In the present embodiment, after a heat treatment including holding at 600°C for 120 minutes followed by air cooling is performed, when, in the cross section orthogonal to the casting direction, the area rate of the fine $\alpha$ phase with a grain size of 10 $\mu$m or less is 10% or more and 20% or less, the heat resistance and the strength are further excellent.

In the present embodiment, when, in the cross section orthogonal to the casting direction, an average crystal grain size of the $\beta$ phase is 500 $\mu$m or less, exhibiting a crystal structure in which dendrites and columnar crystals are fragmented, and, with a portion having a maximum length of the $\alpha$ phase being defined as a major axis and with a portion having a maximum length orthogonal to the major axis being defined as a minor axis, a ratio L1/L2 of a major axis length L1 to a minor axis length L2 is in a range of 1 to 4, and the $\alpha$ phase have a substantially circular shape, an elliptical shape, or a polygonal shape, the strength, the ductility, and the machinability are further excellent.

In the present embodiment, when the oscillation mark depth is less than 50 $\mu$m, the quality is excellent with few defects during casting.

In the present embodiment, when the cross sectional area of the cross section orthogonal to the casting direction is in a range of 12 mm$^2$ or more and 227 mm$^2$ or less, various parts can be efficiently manufactured.

The Cu-Zn-Si-Pb-P-based alloy continuous cast wire rod according to the embodiment of the present invention has been described above, but the present invention is not limited to this, and can be changed as appropriate without departing from the technical idea of the invention.

For example, in the present embodiment, the up-drawn continuous cast wire rod produced using the up-drawing type continuous casting apparatus shown in FIG. 1 has been described, but the present invention is not limited to this, and the Cu-Zn-Si-Pb-P-based alloy continuous cast wire rod may be produced using a horizontal draw-out type continuous casting apparatus that draws out the continuous cast wire rod in the horizontal direction.

In addition, in the present embodiment, the continuous cast wire rod has been describe as being produced with a circular cross section and a cross sectional area in a range of 12 mm$^2$ or more and 227 mm$^2$ or less, but the present invention is not limited to this, and the continuous cast wire rod may have a polygonal cross section or a tubular cross section. In addition, the continuous cast wire rod may have an irregular cross section with a convex portion and a concave portion. In addition, there is no particular limitation on a cross sectional area of the cross section orthogonal to the longitudinal direction of the continuous cast wire rod.

## Examples

Hereinafter, results of confirmation experiments conducted to confirm the effects of the present invention will be described.

Melting raw materials were prepared to have the compositions shown in Tables 1 and 2. 500 kg of the prepared melting raw material was charged into the crucible 12 of the casting furnace 11 shown in FIG. 1 and melted by being heated by heating means.

A mold for producing a cast wire rod having an outer diameter of 6 mm (cross sectional area of a cross section orthogonal to the drawing direction: 28.26 mm$^2$) and a circular cross section was prepared. In addition, for evaluation of machinability, a mold for producing a cast wire rod having an outer diameter of 17 mm (cross sectional area of a cross section orthogonal to the drawing direction: 226.87 mm$^2$) and a circular cross section was prepared.

Then, casting conditions were set to meet cooling conditions shown in Tables 1 and 2, and 300 kg of the cast wire rod was produced through the drawing-out process.

The obtained cast wire material was cut in a direction orthogonal to the casting direction to obtain a microstructure

observation specimen. In addition, the cast wire material was cut along a center line parallel to the casting direction to prepare a microstructure observation specimen for evaluating an oscillation mark depth and a discolored portion.

The above-described various specimens were subjected to emery polishing in the order of #240, 400, 800, and 1500, each for 1000 seconds at a pressure of 100 N and a speed of 100 r/min. Next, buff polishing was performed in the order of particles of 9 μm, 3 μm, and 1 μm, each for 1000 seconds at a pressure of 30 N and a speed of 100 r/min.

Thereafter, the specimens were immersed in an etching solution (mixture of hydrogen peroxide water and ammonia water) at 30°C to 40°C and subjected to ultrasonic washing for 30 to 60 seconds. Next, the specimens were immersed in water at room temperature, subjected to ultrasonic washing for 30 to 60 seconds, and then dried.

(Microstructure of Cross Section orthogonal to Casting Direction)

A cross section of the cast wire rod orthogonal to the casting direction was observed with an optical microscope at a magnification of 500x to obtain a microstructure image of a region of 219 μm in width × 275 μm in height. FIGS. 2A and 2B show examples of the microstructure observation results of the entire cross section of the cast wire rod.

(Area Rate of γ Phase)

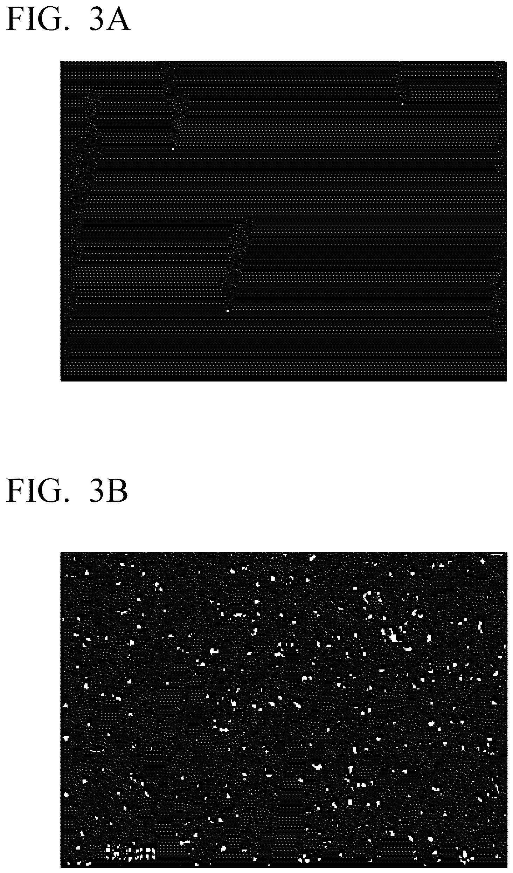

The microstructure image obtained as described above was imported into image analysis software image Fiji, and the image was binarized such that a γ phase portion appeared in white and the remaining portions appeared in black. FIGS. 3A and 3B show examples of the binarized image. The area rate of the γ phase was calculated from the binarized image.

(Area Rate of Fine α Phase with Grain Size of 10 μm or less)

From the microstructure image obtained as described above, α phase grains with an aspect ratio of 1:1 to 1:4 and a two-dimensional shape of substantially circular, elliptical, or polygonal were extracted. For each of the extracted α phase grains, as shown in FIG. 4, a distance of a line having the longest distance among lines connecting two points on a grain boundary of the same crystal was defined as a crystal grain size.

Fine α-phase grains with a grain size of 10 μm or less were extracted, and the area rate was calculated using image analysis software image Fiji.

(Phase Ratio of α Phase and β Phase)

The microstructure image obtained as described above was imported into image analysis software image Fiji, and the image was binarized such that an α phase portion appeared in white and the remaining portions (β phase and γ phase) appeared in black. FIGS. 5A and 5B show examples of the observation image and the binarized image. The area rate of the α phase was calculated from the binarized image.

For example, when the area rate of the α phase is 50 and the area rate of the γ phase is 0.01, the area rate of the β phase is 100 - 50 - 0.01 = 49.99. Therefore, the area rate of α and β is 50:49.99.

(Mechanical Characteristics)

The obtained continuous cast wire rod with a diameter φ of 6 mm was cut to have a length of 150 mm, and a tensile test was performed under conditions of an inter-grip distance of 70 mm, an inter-gauge point distance of 50 mm, and a tensile speed of 15 MPa/sec using a tensile tester AG-100 kNX to evaluate tensile strength and elongation.

(Machinability)

The machinability was evaluated through a cutting test using a lathe. A test material was produced by machining a φ17 mm continuous cast wire rod (casting material) down to a diameter of 14 mm.

In addition, for the extruded material of Comparative Example 9, a specimen was prepared by performing direct extrusion using an actual machine to φ25 mm, followed by machining down to φ14 mm. This specimen was subjected to a machinability test.

A K10 carbide tool (chip) without a chip breaker was attached to a lathe. Using this lathe, the circumferential cutting of the test material with a diameter of 14 mm was performed under dry conditions with a rake angle of 0°, a nose radius of 0.4 mm, a clearance angle of 6°, a cutting speed of 40, 110 m/min, a depth of cut of 1.0 mm, and a feed rate of 0.11, 0.21 mm/rev.

Signals emitted from a three-component dynamometer (AST-type tool dynamometer AST-TL1003 manufac-

tured by MIHODENKI Co., Ltd.,) attached to the tool were converted into electrical voltage signals and recorded on a recorder. Next, these signals were converted into cutting resistance components (principal force, feed force, back force, N).

In order to minimize the influence of chip wear, the cutting test was conducted twice in a reciprocating sequence of A → B → C → ... C → B → A, resulting in four measurements for each specimen. The cutting resistance was obtained by the following equation.

Cutting resistance (resultant force of principal force, feed force, and back force) = $((\text{principal force})^2 + (\text{feed force})^2 + (\text{back force})^2)^{1/2}$

The cutting resistance was measured four times in each sample, and an average value thereof was adopted. A relative value (machinability index) of the cutting resistance of the specimen was calculated with a cutting resistance of a commercially available free-cutting brass rod C3604 made of a Zn-59 mass% Cu-3 mass% Pb-0.2 mass% Fe-0.3 mass% Sn alloy being taken as 100 to perform relative evaluation. The higher the machinability index, the better the machinability. The description of "three components" refers to the resultant force of the principal force, the feed force, and the back force, and indicates the machinability index. The machinability index was obtained as follows.

Index of cutting test result of specimen (machinability index) = (cutting resistance of C3604/cutting resistance of specimen) $\times$ 100

(Heat Treatment)

The obtained continuous cast wire rod was subjected to a heat treatment in an oxygen atmosphere at 450°C for 120 minutes using a muffle furnace and then air-cooled, and the phase ratio of the $\alpha$ phase, the $\beta$ phase, and the $\gamma$ phase and the area rate of the fine $\alpha$ phase were measured by the above-described procedure.

FIGS. 6A and 6B show examples of microstructure observation results after the heat treatment. In addition, FIG. 7 shows an example of an image obtained by binarizing an image such that the $\gamma$ phase portion appeared white and the remaining portions appeared black.

In addition, the obtained continuous cast wire rod was subjected to a heat treatment in an oxygen atmosphere at 475°C for 120 minutes using a muffle furnace and then air-cooled, and the strength, the elongation, and the machinability (machinability index) were measured by the above-described procedure.

Further, the obtained continuous cast wire rod was subjected to a heat treatment in an oxygen atmosphere at 600°C for 120 minutes using a muffle furnace and then air-cooled, and the area rate of the $\alpha$ phase was measured by the above-described procedure.

(Cold Drawing Area Reduction Rate until Fracture)

For a φ6 mm cast wire, a cold drawing test was conducted in the following order: drawing (reduction rate: 0%) with a die having an inner diameter of 6.0 mm → removal of the skin by 50 μm on each side with a peeling die having an inner diameter of 5.8 mm → drawing (reduction rate: 10% from a wire having an inner diameter of 5.8 mm) with a die having an inner diameter of 5.5 mm → drawing (reduction rate: 20% from a wire having an inner diameter of 5.8 mm) with a die having an inner diameter of 5.2 mm → drawing (reduction rate: 32% from a wire having an inner diameter of 5.8 mm) with a die having an inner diameter of 4.8 mm → drawing (reduction rate: 41% from a wire having an inner diameter of 5.8 mm) with a die having an inner diameter of 4.45 mm → drawing (reduction rate: 52% from a wire having an inner diameter of 5.8 mm) with a die having an inner diameter of 4.0 mm → drawing (reduction rate: 57% from a wire having an inner diameter of 5.8 mm) with a die having an inner diameter of 3.8 mm → drawing (reduction rate: 61% from a wire having an inner diameter of 5.8 mm) with a die having an inner diameter of 3.6 mm.

For example, when wire breakage occurred during drawing with a die having an inner diameter of 3.8 mm, the cold drawing area reduction rate until fracture was recorded as 52%, as the material had been successfully drawn through the previous die (inner diameter: 4.0 mm). The cold drawing area reduction rate until fracture was obtained by such a method.

(Oscillation Mark Depth)

The obtained cast wire material was cut into 10 mm along a center line parallel to a drawing direction. Emery polishing was performed in the order of #240, 400, 800, and 1500, each for 1000 seconds at a pressure of 100 N and a speed of 100 r/min. Next, buff polishing was performed in the order of particles of 9 μm, 3 μm, and 1 μm, each for 1000

seconds at a pressure of 30 N and a speed of 100 r/min.

Thereafter, the specimens were immersed in an etching solution (mixture of hydrogen peroxide water and ammonia water) at 30°C to 40°C and subjected to ultrasonic washing for 30 to 60 seconds. Next, the specimens were immersed in water at room temperature, subjected to ultrasonic washing for 30 to 60 seconds, and then dried.

Microstructure observation was conducted with an optical microscope at a magnification of 100x. An example of the observation results is shown in FIG. 8. As shown in FIG. 8, continuous depressions or cracks from a surface layer edge to a center portion side of the cast wire sample were defined as oscillation marks. A starting position of the oscillation mark at the surface layer edge was defined as a 0 mm position, and, from this 0 mm position, a line orthogonal to the drawing direction was drawn so that it intersects with an end position of the oscillation mark on the center portion side. The line length was defined as the oscillation mark depth.

The oscillation mark depth of less than 50 μm was evaluated as "Good", and the oscillation mark depth of more than 50 μm was evaluated as "Not Good".

(Discolored Portion)

The cast wire of φ6 was cut to a length of 10 mm, and then cut horizontally relative to the casting direction so that it passes through the center portion of the cast wire. For both long sides (10 mm each, total length of 20 mm) of the cast wire cut in this manner (where the cut surface forms a 6 mm × 10 mm rectangle), the total length of the discolored portions was measured. An example of the observation results is shown in FIGS. 9A, 9B, and 9C.

In FIG. 9A, the total length of the discolored portions was 2.4 mm (although only two images, FIGS. 9B and 9C, are given as examples for measuring a length L3 of the discolored portion, the total length of the discolored portions was actually derived from a larger number of observation images).

(Average Crystal Grain Size of β Phase)

Microstructure observation was conducted with an optical microscope at a magnification of 100x. An example of the observation results is shown in FIGS. 10A and 10B. FIG. 10A is Present Invention Example 11, and FIG. 10B is Comparative Example 1. A portion surrounded by a broken line in FIG. 10B is the β phase.

In FIG. 10B (for Comparative Example 1), the β phase has a columnar crystal shape. Further, when a distance of a line having the longest distance among lines connecting two points on a grain boundary of the same crystal was defined as a crystal grain size, the grain size exceeds 500 μm. On the other hand, in Present Invention Example 11, the columnar crystals are divided to form a granular structure.

The grain boundaries of the β phase of 500 μm or less were evaluated as "Good", and those of more than 500 μm were evaluated as "Not Good", and the results are shown in the tables.

[Table 1]

| | | Component composition (mass%) | | | | | | Cooling rate (°C/sec.) | Phase ratio (%) | | | | | | Area rate of fine α phase (%) | | |
|---|---|---|---|---|---|---|---|---|---|---|---|---|---|---|---|---|---|
| | | | | | | | | | Casting material | | | After heat treatment at 450°C | | | Casting material | After heat treatment | |
| | | Cu | Si | Pb | P | Bi | Zn and impurities | | α phase | β phase | γ phase | α phase | β phase | γ phase | | 450°C | 600°C |
| Present Invention Example | 1 | 64.645 | 0.805 | 0.062 | 0.141 | 0.021 | Balance | 23 | 67.2 | 32.7 | 0.08 | 55.3 | 44.6 | 0.10 | 52 | 43 | 20 |
| | 2 | 60.617 | 0.881 | 0.063 | 0.128 | 0.047 | Balance | 61 | 43.3 | 56.7 | 0.01 | 46.8 | 53.1 | 0.09 | 43 | 35 | 15 |
| | 3 | 62.583 | 1.152 | 0.128 | 0.071 | 0.033 | Balance | 35 | 54.4 | 45.6 | 0.03 | 53.1 | 46.8 | 0.10 | 47 | 37 | 17 |
| | 4 | 63.265 | 0.429 | 0.144 | 0.096 | 0.032 | Balance | 75 | 59.2 | 40.8 | 0.01 | 58.8 | 41.1 | 0.09 | 45 | 33 | 18 |
| | 5 | 63.036 | 0.925 | 0.231 | 0.104 | 0.026 | Balance | 23 | 57.4 | 42.6 | 0.01 | 57.0 | 42.9 | 0.08 | 49 | 38 | 18 |
| | 6 | 61.947 | 0.731 | 0.002 | 0.123 | 0.025 | Balance | 35 | 50.8 | 49.2 | 0.01 | 49.9 | 50.0 | 0.09 | 45 | 40 | 16 |
| | 7 | 63.544 | 0.968 | 0.067 | 0.186 | 0.039 | Balance | 35 | 60.4 | 39.6 | 0.01 | 54.0 | 45.9 | 0.08 | 49 | 39 | 15 |
| | 8 | 62.415 | 0.666 | 0.096 | 0.042 | 0.047 | Balance | 35 | 53.8 | 46.2 | 0.01 | 54.1 | 45.8 | 0.08 | 41 | 38 | 15 |
| | 9 | 64.028 | 0.573 | 0.132 | 0.087 | 0.085 | Balance | 61 | 63.4 | 36.6 | 0.02 | 59.5 | 40.4 | 0.08 | 50 | 40 | 15 |
| | 10 | 63.179 | 0.967 | 0.087 | 0.063 | 0.012 | Balance | 35 | 58.1 | 41.9 | 0.01 | 57.2 | 42.7 | 0.08 | 49 | 40 | 14 |
| | 11 | 62.594 | 0.887 | 0.085 | 0.098 | 0.069 | Balance | 35 | 54.4 | 45.6 | 0.02 | 55.5 | 44.4 | 0.10 | 48 | 37 | 16 |
| | 12 | 63.747 | 0.991 | 0.121 | 0.101 | 0.055 | Balance | 35 | 61.6 | 38.4 | 0.02 | 59.0 | 40.9 | 0.10 | 48 | 39 | 17 |
| | 13 | 63.048 | 0.900 | 0.195 | 0.146 | 0.041 | Balance | 35 | 51.0 | 49.0 | 0.01 | 51.2 | 48.7 | 0.10 | 56 | 55 | 20 |
| | 14 | 62.175 | 1.007 | 0.060 | 0.074 | 0.047 | Balance | 35 | 50.4 | 49.6 | 0.01 | 49.9 | 50.0 | 0.09 | 55 | 49 | 19 |
| | 15 | 61.987 | 0.874 | 0.075 | 0.093 | 0.000 | Balance | 35 | 52.1 | 47.9 | 0.01 | 53.2 | 46.7 | 0.08 | 44 | 34 | 18 |

[Table 2]

| | | Component composition (mass%) | | | | | | Cooling rate (°C/sec.) | Phase ratio (%) | | | | | | Area rate of fine α phase (%) | | |
|---|---|---|---|---|---|---|---|---|---|---|---|---|---|---|---|---|---|
| | | | | | | | | | Casting material | | | After heat treatment at 450°C | | | | After heat treatment | |
| | | Cu | Si | Pb | P | Bi | Zn and impurities | | α phase | β phase | γ phase | α phase | β phase | γ phase | Casting material | 450°C | 600°C |
| Comparative Example | 1 | 58.412 | 0.719 | 0.021 | 0.074 | 0.035 | Balance | 61 | 36.3 | 63.7 | 0.01 | 45.3 | 54.6 | 0.09 | 20 | 16 | 5 |
| | 2 | 67.896 | 0.612 | 0.045 | 0.146 | 0.032 | Balance | 35 | 77.8 | 22.0 | 0.22 | 60.2 | 38.0 | 1.80 | 27 | 20 | 5 |
| | 3 | 62.633 | 0.245 | 0.073 | 0.183 | 0.022 | Balance | 35 | 54.5 | 45.5 | 0.01 | 53.3 | 46.6 | 0.08 | 24 | 15 | 5 |
| | 4 | 63.549 | 1.638 | 0.126 | 0.174 | 0.047 | Balance | 35 | 60.5 | 39.3 | 0.19 | 59.8 | 38.3 | 1.90 | 27 | 16 | 3 |
| | 5 | 63.837 | 0.977 | 0.000 | 0.092 | 0.035 | Balance | 61 | 61.7 | 38.3 | 0.04 | 60.1 | 39.8 | 0.11 | 29 | 18 | 4 |
| | 6 | 62.541 | 0.902 | 0.347 | 0.046 | 0.088 | Balance | 61 | 53.9 | 46.1 | 0.01 | 55.1 | 44.8 | 0.10 | 29 | 19 | 3 |
| | 7 | 63.712 | 0.825 | 0.129 | 0.012 | 0.069 | Balance | 35 | 61.6 | 38.4 | 0.03 | 59.2 | 40.7 | 0.09 | 20 | 15 | 3 |
| | 8 | 61.117 | 0.603 | 0.088 | 0.279 | 0.032 | Balance | 75 | 50.1 | 49.9 | 0.01 | 50.3 | 49.6 | 0.08 | 21 | 14 | 2 |
| | 9 | 62.788 | 0.938 | 0.104 | 0.096 | 0.045 | Balance | 50 | 51.4 | 47.3 | 1.3 | 48.1 | 49.8 | 2.10 | 5 | 18 | 1 |

[Table 3]

| | | Mechanical characteristics | | | | | | | | Cold drawing area reduction rate until fracture (%) | Oscillation mark depth | Total length of discolored portion | Average crystal grain size of β phase (μm) |
|---|---|---|---|---|---|---|---|---|---|---|---|---|---|
| | | Casting material | | | | After heat treatment at 475°C | | | | | | | |
| | | Strength (N/mm$^2$) | Elongation (%) | Machinability index 40 m/min | Machinability index 110 m/min | Strength (N/mm$^2$) | Elongation (%) | Machinability index 110 m/min | | | | | |
| Present Invention Example | 1 | 530 | 31 | 91 | 61 | 461 | 36 | 81 | | 52 | Good | Good | Good |
| | 2 | 549 | 21 | 91 | 61 | 478 | 24 | 81 | | 52 | Good | Good | Good |
| | 3 | 560 | 15 | 95 | 63 | 487 | 17 | 85 | | 52 | Good | Good | Good |
| | 4 | 529 | 31 | 91 | 61 | 460 | 36 | 81 | | 52 | Good | Good | Good |
| | 5 | 524 | 34 | 93 | 62 | 456 | 38 | 83 | | 52 | Good | Good | Good |
| | 6 | 530 | 31 | 91 | 61 | 461 | 36 | 81 | | 52 | Good | Good | Good |
| | 7 | 541 | 16 | 92 | 61 | 471 | 19 | 83 | | 52 | Good | Good | Good |
| | 8 | 533 | 19 | 91 | 61 | 464 | 22 | 81 | | 52 | Good | Good | Good |
| | 9 | 526 | 33 | 92 | 61 | 458 | 38 | 82 | | 52 | Good | Good | Good |
| | 10 | 534 | 29 | 91 | 61 | 465 | 34 | 81 | | 52 | Good | Good | Good |
| | 11 | 534 | 29 | 92 | 61 | 465 | 34 | 82 | | 52 | Good | Good | Good |
| | 12 | 536 | 28 | 93 | 62 | 466 | 32 | 85 | | 52 | Good | Good | Good |
| | 13 | 538 | 27 | 95 | 63 | 468 | 31 | 86 | | 52 | Good | Good | Good |
| | 14 | 542 | 25 | 94 | 63 | 472 | 29 | 85 | | 52 | Good | Good | Good |
| | 15 | 520 | 17 | 90 | 60 | 452 | 20 | 81 | | 52 | Good | Good | Good |

[Table 4]

| | | Mechanical characteristics | | | | | | | Cold drawing area reduction rate until fracture (%) | Oscillation mark depth | Total length of discolored portion | Average crystal grain size of β phase (μm) |
|---|---|---|---|---|---|---|---|---|---|---|---|---|
| | | Casting material | | | | After heat treatment at 475°C | | | | | | |
| | | Strength (N/mm²) | Elongation (%) | Machinability index | | Strength (N/mm²) | Elongation (%) | Machinability index 110 m/min | | | | |
| | | | | 40 m/min | 110 m/min | | | | | | | |
| Comparative Example | 1 | 570 | 11 | 73 | 49 | 496 | 13 | 65 | 32 | Not Good | Not Good | Not Good |
| | 2 | 472 | 28 | 88 | 59 | 411 | 39 | 79 | 41 | Good | Not Good | Not Good |
| | 3 | 500 | 22 | 68 | 45 | 435 | 26 | 61 | 41 | Not Good | Good | Not Good |
| | 4 | 562 | 9 | 62 | 41 | 489 | 10 | 55 | 32 | Not Good | Not Good | Not Good |
| | 5 | 571 | 11 | 65 | 43 | 497 | 13 | 67 | 32 | Good | Not Good | Not Good |
| | 6 | 447 | 34 | 82 | 55 | 389 | 39 | 68 | 20 | Not Good | Not Good | Not Good |
| | 7 | 530 | 15 | 68 | 45 | 461 | 17 | 61 | 32 | Good | Not Good | Not Good |
| | 8 | 524 | 17 | 67 | 45 | 456 | 20 | 59 | 20 | Not Good | Not Good | Not Good |
| | 9 | 536 | 33 | 87 | 57 | 442 | 37 | 72 | 41 | Good | Good | Good |

In Comparative Example 1, the Cu content was low (the Zn content was high), the proportion of the α phase in the area ratio of the α phase to the β phase was low (the proportion of the β phase was high), the cold drawing area reduction rate until fracture was low, and the workability could not be ensured. In addition, the machinability index was low, and the machinability was insufficient. Further, the oscillation mark depth and the discolored portion were evaluated as "Not Good".

In Comparative Example 2, the Cu content was high (the Zn content was low), the area rate of the γ phase exceeded 0.1%, the cold drawing area reduction rate until fracture was low, and the workability could not be ensured. In addition, the discolored portion was evaluated as "Not Good".

In Comparative Example 3, the Si content was low, the cold drawing area reduction rate until fracture was low, and the workability could not be ensured. In addition, the machinability index was low, and the machinability was insufficient. Further, the oscillation mark depth was evaluated as "Not Good".

In Comparative Example 4, the Si content was high, the area rate of the γ phase exceeded 0.1%, the cold drawing area reduction rate until fracture was low, and the workability could not be ensured. In addition, the machinability index was low, and the machinability was insufficient. Further, the oscillation mark depth and the discolored portion were evaluated as "Not Good".

In Comparative Example 5, Pb was not contained, the machinability index was low, and the machinability was insufficient. In addition, the discolored portion was evaluated as "Not Good".

In Comparative Example 6, the Pb content was high, and the strength was low. In addition, the cold drawing area reduction rate until fracture was low, and the workability could not be ensured. Further, the oscillation mark depth and the discolored portion were evaluated as "Not Good".

In Comparative Example 7, the P content was low, the machinability index was low, and the machinability was insufficient. In addition, the cold drawing area reduction rate until fracture was low, and the workability could not be ensured. Further, the discolored portion was evaluated as "Not Good".

In Comparative Example 8, the P content was high, the machinability index was low, and the machinability was insufficient. In addition, the cold drawing area reduction rate until fracture was low, and the workability could not be ensured. Further, the oscillation mark depth and the discolored portion were evaluated as "Not Good".

On the other hand, according to the present invention examples, the strength and the elongation were excellent.

In addition, the machinability index was high, and the machinability was excellent. Further, the cold drawing area reduction rate until fracture was high, and the workability could be ensured. In addition, the oscillation mark depth and the discolored portion were evaluated as "Good", and the continuous casting could be stably performed. Further, even after the heat treatment, the strength, the elongation, and the machinability were excellent.

As described above, according to the present invention examples, it was confirmed that it is possible to provide a high-quality Cu-Zn-Si-Pb-P-based alloy continuous cast wire rod having excellent strength, elongation, and machinability and having few defects.

INDUSTRIAL APPLICABILITY

According to the present invention, it is possible to provide a high-quality Cu-Zn-Si-Pb-P-based alloy continuous cast wire rod having excellent strength, elongation, and machinability and having few defects.

## Claims

**1.** A Cu-Zn-Si-Pb-P-based alloy continuous cast wire rod comprising:

Cu in an amount of more than 60.0 mass% and less than 65.0 mass%;
Si in a range of 0.40 mass% or more and 1.20 mass% or less;
Pb in a range of 0.002 mass% or more and 0.250 mass% or less;
P in a range of 0.040 mass% or more and 0.190 mass% or less; and
Bi as an optional element in an amount of 0.001 mass% or more and 0.100 mass% or less,
with a balance being Zn and impurities,
wherein, among the impurities, a total content of Fe, Mn, Co, and Cr is 0.450 mass% or less, and a total content of Sn and Al is 0.30 mass% or less, and
in a cross section orthogonal to a casting direction, an area ratio of an $\alpha$ phase to a $\beta$ phase is $\alpha$:$\beta$ = 40 to 70:60 to 30, an area rate of a $\gamma$ phase is 0.1% or less, and an area rate of a fine $\alpha$ phase with a grain size of 10 $\mu$m or less is 30% or more and 60% or less.

**2.** The Cu-Zn-Si-Pb-P-based alloy continuous cast wire rod according to Claim 1, wherein a tensile strength is in a range of 450 MPa or more and 600 MPa or less, and an elongation is in a range of 12% or more and 35% or less.

**3.** The Cu-Zn-Si-Pb-P-based alloy continuous cast wire rod according to Claim 1 or 2, wherein, in a case where performing circumferential cutting of a machined test material with a diameter of 14 mm using a lathe equipped with an ISO-classified K10 carbide tool under following conditions (dry): a rake angle of 0°, a nose radius of 0.4 mm, a clearance angle of 6°, a cutting speed of 40 m/min, a depth of cut of 1.0 mm, and a feed rate of 0.11 mm/rev., a machinability index is 90 or more, the machinability index being a relative value of a cutting resistance calculated by Equation (1) based on measurement values obtained by a dynamometer attached to the tool, with a cutting resistance of a commercially available free-cutting brass rod C3604 made of a Zn-59 mass% Cu-3 mass% Pb-0.2 mass% Fe-0.3 mass% Sn alloy being taken as 100,

$$\text{cutting resistance} = ((\text{principal force})^2 + (\text{feed force})^2 + (\text{back force})^2)^{1/2}. \qquad \text{Equation (1):}$$

**4.** The Cu-Zn-Si-Pb-P-based alloy continuous cast wire rod according to Claim 1 or 2, wherein, in a case where performing circumferential cutting of a machined test material with a diameter of 14 mm using a lathe equipped with an ISO-classified K10 carbide tool under following conditions (dry): a rake angle of 0°, a nose radius of 0.4 mm, a clearance angle of 6°, a cutting speed of 110 m/min, a depth of cut of 1.0 mm, and a feed rate of 0.21 mm/rev., a machinability index is 60 or more, the machinability index being a relative value of a cutting resistance calculated by Equation (1) based on measurement values obtained by a dynamometer attached to the tool, with a cutting resistance of a commercially available free-cutting brass rod C3604 made of a Zn-59 mass% Cu-3 mass% Pb-0.2 mass% Fe-0.3 mass% Sn alloy being taken as 100,

$$\text{cutting resistance} = ((\text{principal force})^2 + (\text{feed force})^2 + (\text{back force})^2)^{1/2}. \qquad \text{Equation (1):}$$

**5.** The Cu-Zn-Si-Pb-P-based alloy continuous cast wire rod according to Claim 1 or 2,
wherein, after a heat treatment including holding at 450°C for 120 minutes followed by air cooling is performed, in constituent phases of a metal microstructure, the area rate of the γ phase is 0.1% or less, and the area rate of the fine α phase with a grain size of 10 μm or less is 30% or more and 60% or less.

**6.** The Cu-Zn-Si-Pb-P-based alloy continuous cast wire rod according to Claim 1 or 2,
wherein, after a heat treatment including holding at 475°C for 120 minutes followed by air cooling is performed, a tensile strength is 400 MPa or more and 550 MPa or less, and an elongation is 14% or more and 38% or less.

**7.** The Cu-Zn-Si-Pb-P-based alloy continuous cast wire rod according to Claim 1 or 2,

wherein, after a heat treatment including holding at 475°C for 120 minutes followed by air cooling is performed, in a case where performing circumferential cutting of a machined test material with a diameter of 14 mm using a lathe equipped with an ISO-classified K10 carbide tool under following conditions (dry): a rake angle of 0°, a nose radius of 0.4 mm, a clearance angle of 6°, a cutting speed of 40 m/min, a depth of cut of 1.0 mm, and a feed rate of 0.11 mm/rev., a machinability index is 80 or more, the machinability index being a relative value of a cutting resistance calculated by Equation (1) based on measurement values obtained by a dynamometer attached to the tool, with a cutting resistance of a commercially available free-cutting brass rod C3604 made of a Zn-59 mass% Cu-3 mass% Pb-0.2 mass% Fe-0.3 mass% Sn alloy being taken as 100,

cutting resistance = $((\text{principal force})^2 + (\text{feed force})^2 + (\text{back force})^2)^{1/2}$. Equation (1):

**8.** The Cu-Zn-Si-Pb-P-based alloy continuous cast wire rod according to Claim 1 or 2,

wherein, after a heat treatment including holding at 475°C for 120 minutes followed by air cooling is performed, a maximum possible cold drawing area reduction rate until wire breakage is 50% or more.

**9.** The Cu-Zn-Si-Pb-P-based alloy continuous cast wire rod according to Claim 1 or 2,
wherein, after a heat treatment including holding at 600°C for 120 minutes followed by air cooling is performed, the area rate of the fine α phase with a grain size of 10 μm or less is 10% or more and 20% or less.

**10.** The Cu-Zn-Si-Pb-P-based alloy continuous cast wire rod according to Claim 1 or 2,

wherein, in the cross section orthogonal to the casting direction, an average crystal grain size of the β phase is 500 μm or less, exhibiting a crystal structure in which dendrites and columnar crystals are fragmented, and
in a case where a portion having a maximum length of the α phase is defined as a major axis and a portion having a maximum length orthogonal to the major axis is defined as a minor axis, a ratio L1/L2 of a major axis length L1 to a minor axis length L2 is in a range of 1 to 4, and the α phase has a substantially circular shape, an elliptical shape, or a polygonal shape.

**11.** The Cu-Zn-Si-Pb-P-based alloy continuous cast wire rod according to Claim 1 or 2,
wherein an oscillation mark depth is less than 50 μm.

**12.** The Cu-Zn-Si-Pb-P-based alloy continuous cast wire rod according to Claim 1 or 2,
wherein a cross sectional area of the cross section orthogonal to the casting direction is in a range of 12 $mm^2$ or more and 227 $mm^2$ or less.

FIG. 1

F
17
17
1
20
10
28
21
24
15
12
11

FIG. 2A

WIRE
50 μm

FIG. 2B

50 μm

FIG. 3A

FIG. 3B

FIG. 4

FIG. 5A

50 μm

FIG. 5B

FIG. 6A

FIG. 6B

50 μm

FIG. 7A

FIG. 7B

FIG. 8

FIG. 9A

10mm

FIG. 9B

L3

FIG. 9C

L3

FIG. 10A

FIG. 10B

**INTERNATIONAL SEARCH REPORT**

International application No. **PCT/JP2024/036437**

**A. CLASSIFICATION OF SUBJECT MATTER**

***C22C 9/04***(2006.01)i; ***B22D 11/00***(2006.01)i; ***B22D 11/04***(2006.01)i; ***B23B 1/00***(2006.01)i; ***C22F 1/00***(2006.01)i; ***C22F 1/08***(2006.01)i

FI: C22C9/04; B22D11/00 F; B23B1/00 Z; C22F1/08 A; C22F1/00 624; C22F1/00 611; C22F1/00 604; C22F1/00 630A; C22F1/00 630J; C22F1/00 630K; C22F1/00 631Z; B22D11/04 115; B22D11/04 114

According to International Patent Classification (IPC) or to both national classification and IPC

**B. FIELDS SEARCHED**

Minimum documentation searched (classification system followed by classification symbols)

C22C9/04; B22D11/00; B22D11/04; B23B1/00; C22F1/00; C22F1/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/261636 A1 (MITSUBISHI MATERIALS CORPORATION) 30 December 2020 (2020-12-30) | 1-12 |
| A | WO 2021/117528 A1 (MITSUBISHI MATERIALS CORPORATION) 17 June 2021 (2021-06-17) | 1-12 |
| A | WO 2021/225165 A1 (MITSUBISHI MATERIALS CORPORATION) 11 November 2021 (2021-11-11) | 1-12 |
| E, A | WO 2024/228354 A1 (MITSUBISHI MATERIALS CORPORATION) 07 November 2024 (2024-11-07) | 1-12 |

☐ Further documents are listed in the continuation of Box C.

☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 December 2024** | **24 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/036437**

| Patent document cited in search report | Publication date (day/month/year) | Patent family member(s) | Publication date (day/month/year) |
|---|---|---|---|
| WO 2020/261636 A1 | 30 December 2020 | US 2022/0275479 A1 | |
| | | EP 3992321 A1 | |
| | | KR 10-2021-0148347 A | |
| | | CN 113906150 A | |
| | | JP 2021-42460 A | |
| | | JP 2021-42459 A | |
| | | JP 2021-42461 A | |
| | | JP 2021-42462 A | |
| WO 2021/117528 A1 | 17 June 2021 | EP 4074849 A1 | |
| | | US 2024/0093332 A1 | |
| | | KR 10-2022-0059528 A | |
| | | CN 114761592 A | |
| | | JP 2021-42459 A | |
| | | JP 2021-42461 A | |
| | | JP 2021-42460 A | |
| | | JP 2021-42462 A | |
| WO 2021/225165 A1 | 11 November 2021 | US 2023/0160039 A1 | |
| | | CN 115443343 A | |
| | | EP 4148154 A1 | |
| | | JP 2021-176983 A | |
| WO 2024/228354 A1 | 07 November 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023190352 A
- JP 2000119775 A
- WO 2013065830 A
- JP H05169197 A
- JP H08168852 A
- JP H05031561 A
- JP 2014091147 A